**Europäisches Patentamt**

**European Patent Office**

**Office européen des brevets**

(19)

(11) Veröffentlichungsnummer: **0 029 551**
**B1**

(12) **EUROPÄISCHE PATENTSCHRIFT**

(45) Veröffentlichungstag der Patentschrift:
28.09.83

(21) Anmeldenummer: **80106992.3**

(22) Anmeldetag: **12.11.80**

(51) Int. Cl.³: **B 65 G 21/00,** B 65 G 21/20,
B 65 G 17/06, B 23 Q 11/00

(54) **Scharnierbandförderer und Verfahren zu seiner Herstellung.**

(30) Priorität: **12.11.79 DE 2945665**
**11.02.80 DE 3005038**

(43) Veröffentlichungstag der Anmeldung:
**03.06.81 Patentblatt 81/22**

(45) Bekanntmachung des Hinweises auf die Patenterteilung:
**28.09.83 Patentblatt 83/39**

(84) Benannte Vertragsstaaten:
**BE FR GB LU NL SE**

(56) Entgegenhaltungen:
**AT-B-132 109**
**DE-A-1 756 258**
**DE-A-2 536 643**
**DE-C-633 036**
**DE-C-2 166 212**
**DE-U-1 683 439**
**DE-U-7 607 142**
**DE-U-7 633 608**
**FR-A-2 055 797**
**US-A-2 764 276**
**US-A-2 920 743**
**US-A-2 987 168**

(73) Patentinhaber: **Mayfran GmbH, Alfredstrasse 295,**
**D-4300 Essen 1 (DE)**

(72) Erfinder: **von Wietersheim, Klaus, Dipl.-Ing.,**
**Sengenholzerweg 19, D-5628 Heiligenhaus (DE)**
Erfinder: **van den Akker, Gijsbertus, Ovidiusstraat 14,**
**Heerlen (NL)**

(74) Vertreter: **Groening, Hans Wilhelm, Dipl.-Ing.,**
**Siebertstrasse 4 Postfach 860 340,**
**D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Scharnierbandförderer und Verfahren zu seiner Herstellung

Die Erfindung betrifft einen Scharnierbandförderer, vorzugsweise für Metallabfälle, wie Späne oder dergleichen, mit einem im Querschnitt U-förmigen Förderrahmen, dessen eines Ende mit Antriebsstation und dessen anderes Ende mit einer Umlenkstation für ein endloses flexibles sowie mit Löchern versehenes Scharnierband ausgestattet ist, dessen Laufrollen in Führungskanälen geführt sind, die von Profilblechen an der Innenseite von durch Traversen verbundenen Seitenwangen des Förderrahmens sowie von diesen Seitenwangen selbst gebildet sind, wobei die oberen Enden der Seitenwangen mit nach innen gerichteten Längskanten versehen sind.

Ein Förderer der vorgenannten Gattung ist aus der AT-B-132 109 bekannt. Die Förderrahmen dieses bekannten Förderers besteht aus einem durchgehenden U-Profil, wobei an die Innenseite der U-Schenkel Winkeleisen angeschweißt sind, auf deren nach innen gerichteten waagerechten Schenkeln das Arbeitstrum des Scharnierbandes gelagert ist. Das Leertrum läuft auf dem Steg des U-Profils. Zwei weitere Profileisen sind im oberen Bereich der beiden Schenkel des U-Profils vorgesehen, von denen das eine Profil die nach innen gerichtete Längskante bildet, wobei das Profil durch ein Stützprofil abgestützt ist, das sich zwischen der Innenseite des betreffenden U-Schenkels und der Unterseite des die nach innen gerichtete Längskante bildenden Profils erstreckt und dieses abstützt. Der Aufwand für die Herstellung dieses Förderers ist daher verhältnismäßig hoch, während die Verwindungssteifigkeit des Förderrahmens zu wünschen übrig läßt. Eine einwandfreie Führung des Arbeits- und Leertrums an deren Oberseite ist nicht gewährleistet, wenngleich die durchlochten Scharnierbandplatten eine Ableitung von Kühlflüssigkeit ermöglichen, die an zu transportierenden Spänen oder Abfällen von Werkzeugmaschinen anhaftet.

Aus der US-A-2 764 276 ist ein Förderrahmen bekannt, der aus zwei profilierten Seitenwangen besteht, die einteilig oder mehrteilig ausgebildet sind und Führungskanäle für ein endloses Förderband bilden. Die Teile des Förderrahmens können im Sinne einer einfachen und billigen Herstellung gebogen, gewalzt oder verschweißt sein. Dabei sind die Enden des Förderers aus topf- oder glockenförmigen Teilen ausgeschnitten. Bei Höhenförderern sind die horizontalen Abschnitte auf unterschiedlichen Höhen durch geneigte Teile verbunden, wobei die Verbindung zwischen den horizontalen Abschnitten und den geneigten Abschnitten durch bogenförmige Teile hergestellt sind, die aus kreisförmigen Formteilen ausgeschnitten sind, um aus einem einzigen Ausgangsteil verschiedene solcher Verbindungsteile herstellen zu können. Bekanntlich sind jedoch diejenigen Abschnitte des Förderrahmens, in denen das endlose Förderband in eine andere Richtung abgelenkt wird, einem besonderen Verschleiß unterworfen. Außerdem genügt die Profilierung der Seitenwangen allein nicht, um dem Förderer die gewünschte Verwendungssteifigkeit zu vermitteln. Die Lebensdauer eines derartigen Förderers ist daher verhältnismäßig begrenzt.

Der Erfindung liegt die Aufgabe zugrunde, einen Scharnierbandförderer der eingangs erwähnten bekannten Gattung so zu verbessern, daß er ohne Beeinträchtigung seiner Steifigkeit mit einem erheblich geringeren Materialaufwand bei erhöhter Lebensdauer, vereinfachter Wartung und Handhabung und einem verbesserten Schutz für das Bedienungspersonal einfacher, leichter und billiger gebaut werden kann.

Die Erfindung löst diese Aufgabe dadurch, daß bogenförmige Führungen in den Umlenkbereich für das Scharnierband aus lösbar befestigten, gegossenen oder geformten, verschleißfesten Kurvenstücken bestehen, von denen ein Paar an der Umlenkstation an der Unterseite eines Schurrenblechs befestigt ist, das sich zwischen den Seitenwangen von der Oberseite der Umlenkstation zum Scharnierband hin abwärts erstreckt, und daß die unteren, das Leertrum des Scharnierbandes führenden Schenkel der Seitenwangen durch ein im Querschnitt U-förmiges Bodenblech verbunden sind, das bis auf die Oberseite der Umlenkstation um diese herumgeführt ist.

Die bogenförmigen Führungen vermitteln einerseits dem Förderrahmen eine hohe Steifigkeit, andererseits durch die Ausbildung eines Teils der bogenförmigen Führungen als massive Kurvenstücke und deren Lösbarkeit eine wesentlich erhöhte Lebensdauer des Förderers. Diese dem Verschleiß besonders ausgesetzten massiven Kurvenstücke sind leicht austauschbar angebracht. Das im Querschnitt U-förmige Bodenblech trägt dabei erheblich zur Versteifung des Förderrahmens bei und ermöglicht gegebenenfalls eine flüssigkeitsdichte Abdichtung des Förderrahmens für den Fall, daß z. B. vom Fördergut abtropfende Flüssigkeit aufgefangen werden soll. Die Verwendung der an den Seitenwangen befestigten Profilbleche ermöglicht eine sehr schnelle und einfache Herstellung des Förderrahmens sowie eine schnelle Anpassung der für die Teile herzustellenden Vorrichtungen an die jeweils gewünschten Abmessungen.

Ist der Förderer als Höhenförderer ausgebildet, bieten die in Anspruch 2 erwähnten Bogentraversen eine besonders hohe Verwindungssteifigkeit.

Die in Anspruch 3 erwähnten, zwischen den Seitenwangen benachbarter Längenabschnitte des Höhenförderers eingeschweißten Zwickelbleche ermöglichen eine sichere Verschweißung der Förderabschnitte und vermitteln dem Förderrahmen in Verbindung mit den Bogentraversen eine hohe Verwindungs- und Biegesteifigkeit, die in Verbindung mit den massiven Kurvenstükken, die gemäß Anspruch 4 an den sich gegenüberliegenden Zwickelblechen befestigt werden, noch erhöht wird.

Der Einbau massiver Kurvenstücke in der Abwinkelung zwischen dem oberen Ende des mittleren Förderabschnitts und des oberen waagerechten Förderabschnitts des Scharnierbandförderers, wie er gemäß Anspruch 5 vorgesehen ist, ermöglicht auch in diesem Bereich eine erhebliche Versteifung des Förderrahmens in Verbindung mit einem Freihalten des Abwinklungsbereichs vom Fördergut.

Die Ausbildung der bogenförmigen Führungen im Bereich der Antriebsstation als Führungsbleche für die Rückführung des Scharnierbandes in das Leertrum vermitteln dem Förderer, gleichgültig ob er als normaler, sich geradlinig erstreckender Förderer oder als Höhenförderer ausgebildet ist, eine zusätzliche Versteifung des Förderrahmens, wobei die Anordnung des Bodenblechs an der Antriebsstation gemäß Anspruch 7 eine gefahrlose Zugänglichkeit des Inneren des Förderrahmens im Bereich der Antriebs- bzw. Austragsstation gewährleistet.

Die zusätzliche Ausgestaltung der U-förmigen Profilbleche gemäß Anspruch 8 ermöglicht die Unterbringung von sich gegenseitig überlappenden Seitenborden im Obertrum des Scharnierbandes, wobei die zusätzliche Profilierung der Profilbleche zu einer weiteren Versteifung des Förderrahmens beiträgt.

Die in Anspruch 10 erwähnten Umlenktöpfe in der Umlenkstation ermöglichen eine einfache Montage und eine praktisch verdoppelte Lebensdauer, weil sie vor einer Auswechslung nach einer Drehung um 180°C erneut an den Seitenwangen der Umlenkstation mit dem Ziel befestigt werden können, daß derjenige Umfangsteil der Umlenktöpfe, der bisher nicht zum Scharnierband geführt hat, nunmehr der Führung desselben dienen kann.

Anspruch 11 vermittelt den besonderen Vorteil, daß beim Spannen des Scharnierbandes durch Verstellen der Antriebsstation in Richtung des Endes des Förderers gleichzeitig das Federwiderlager der Antriebsstation mit verstellt wird und nicht ein gesondertes Nachstellen desselben unabhängig von der Verstellung der Antriebsstation erforderlich ist. Dabei bleibt die Vorspannung des Federelementes erhalten, das vom Fördergut über das Scharnierband auf die Antriebsstation übertragene wechselnde Zugbeanspruchungen ausgleicht.

Die in den Ansprüchen 12 und 13 angegebenen Abschirmbleche an der Antriebsstation bieten den Bedienungspersonen sicheren Schutz vor einer Berührung der Kettenräder und erfordern kein zusätzliches Lösen und erneutes Befestigen beim Spannen oder Nachspannen des Scharnierbandes gegenüber dem Förderrahmen, weil die an den Lagerböcken befestigten Abschirmbleche bei der mit dem Spannen des Scharnierbandes in Längsrichtung des Förderers verbundenen Verstellung der Lagerböcke mit bewegt werden. Ein zusätzlicher Schutz der Bedienungspersonen wird durch die an die Innenseite der Abschirmbleche angeschweißten Schutzbleche gemäß Anspruch 14 erreicht.

Das Verfahren zur Herstellung des Scharnierbandförderers gemäß den Ansprüchen 15 und 16 gestattet es, den Förderer in äußerst kurzer Zeit auf einfache Weise billig herzustellen, weil die Teile, wie z. B. die massiven Kurvenstücke und die Zwickelbleche, infolge ihrer stets gleichen Abmessungen in den gewünschten Größen bevorratet werden können und die übrigen Teile lediglich durch Schneiden, Biegen und Tiefziehen zugerichtet zu werden brauchen, so daß für die spiegelbildliche Zusammensetzung von zwei Seitenwangen lediglich zwei Vorrichtungen erforderlich sind, die jeweils auf die Abmessungen der zusammenzubauenden Teile eingestellt werden.

In der Zeichnung ist die Erfindung anhand mehrerer Ausführungsbeispiele schematisch veranschaulicht. Es zeigt

Fig. 1 einen Förderer im Längsschnitt gemäß Schnitt I-I in Fig. 2,

Fig. 2 einen Querschnitt gemäß Linie II-II in Fig. 1,

Fig. 3 einen Querschnitt gemäß Fig. 2 mit aufgesetztem Abdeckblech in weggebrochener Darstellung,

Fig. 4 eine Schnittansicht gemäß Schnittlinie IV-IV in Fig. 5,

Fig. 5 eine Endansicht des Antriebsblocks in Richtung des Pfeiles V in Fig. 4,

Fig. 6 eine Innenansicht der in Förderrichtung linken Seitenwange der Umlenkstation mit eingesetztem Kurvenstück und Umlenktopf sowie eines unteren waagerechten Förderabschnitts eines als Höhenförderer ausgebildeten Förderers,

Fig. 7 einen Mittellängsschnitt durch das obere Ende des schräg aufwärts gerichteten mittleren Förderabschnitts und eines oberen waagerechten Förderabschnitts des Förderers mit Antriebsstation ohne Antriebsblock mit eingeschweißter Bogentraverse und einem eingesetzten massiven Kurvenstück,

Fig. 8 einen Mittellängsschnitt durch den Förderer im Bereich der Abwinklung zwischen dem unteren waagerechten und dem schräg aufwärts gerichteten Förderabschnitt mit Zwikkelblech, Kurvenstück und Bogentraverse,

Fig. 9 einen Querschnitt gemäß Schnittlinie IX-IX in Fig. 8 durch die beiden sich gegenüberliegenden Zwickelbleche des Förderers,

Fig. 10 einen Querschnitt gemäß Schnittlinie X-X in Fig. 8,

Fig. 11 eine Endansicht des Kurvenstücks in Richtung des Pfeiles XI in Fig. 6 und 8,

Fig. 12 eine Endansicht auf das Kurvenstück gemäß Pfeil XII in Fig. 7,

Fig. 13 eine Seitenansicht der Antriebsstation mit Antriebsblock und Kettenschutz,

Fig. 14 eine Endansicht zu Fig. 13,

Fig. 15 eine Draufsicht auf einen Kettenschutz an der Antriebsstation,

Fig. 16 ein Fertigungsschema für den Höhenförderer

Nachstehend wird anhand der Figuren ein Höhenförderer beschrieben, obwohl die Erfindung selbstverständlich auch in Verbindung mit einem Förderer anwendbar ist, dessen Förderrahmen sich geradlinig erstreckt.

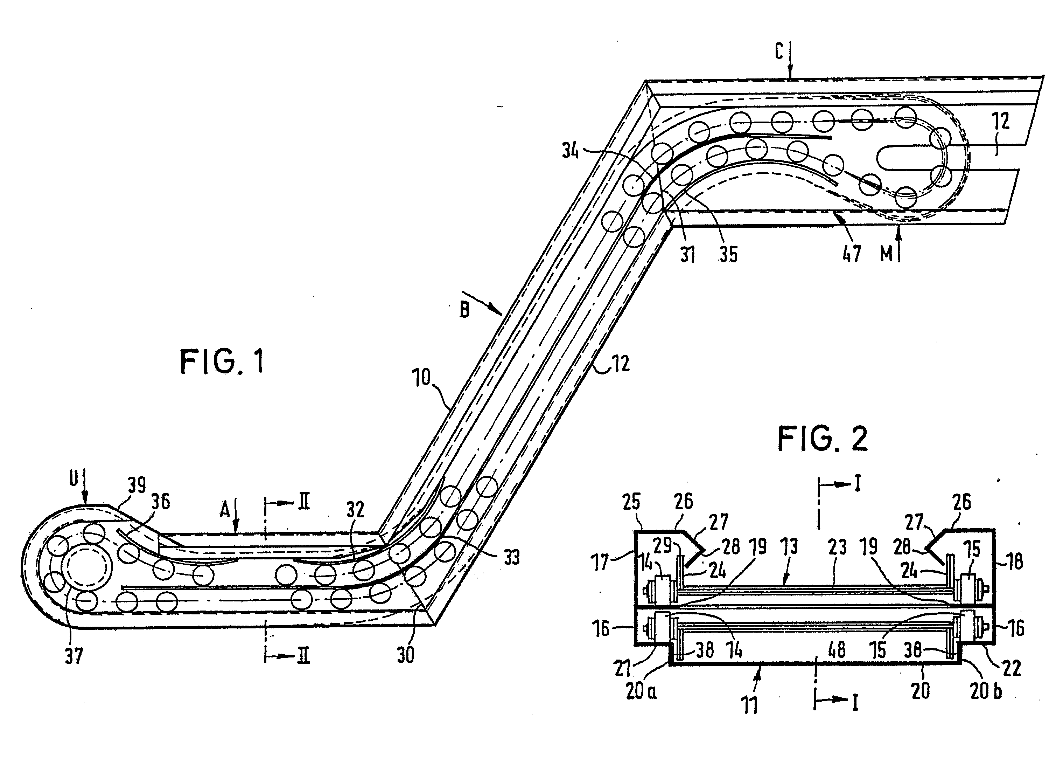

In Fig. 1 und 2 ist ein Scharnierbandförderer 10 für Metallspäne oder dgl. gezeigt, der aus einem im Querschnitt U-förmigen Förderrahmen 11 besteht. Das eine Ende des Scharnierbandförderers 10 weist eine Antriebsstation M auf, die in Längsrichtung des Scharnierbandförderers 10 in dessen Längsschlitzen 12 zum Spannen eines Scharnierbandes 13 verstellbar ist. Das andere Ende des Scharnierbandförderers 10 ist mit einer Umlenkstation U für das endlose flexible Scharnierband 13 versehen. Laufrollen 14, 15 im Arbeitstrum des Scharnierbandes 13 sind auf von der senkrechten Seitenwand 16 der Seitenwangen 17, 18 des Förderrahmens 11 waagerecht nach innen vorstehenden Laufblechen 19 abgestützt. Im Leertrum sind die Laufrollen 14, 15 auf einem unterhalb der Laufbleche 19 vorgesehenen, gegenüber einem Bodenblech 20 des Förderrahmens 11 erhöhtliegenden horizontalen Abschnitt 21 eines unteren, im wesentlichen nach innen gerichteten Schenkels 22 der Seitenwangen 17, 18 abgestützt.

An beiden Seiten von Scharnierbandplatten 23 angeordnete, sich gegenseitig in Längsrichtung überlappende Seitenborde 24 im Obertrum des Scharnierbandes 13 sind von im wesentlichen waagerechten oberen Schenkeln 25 der beiden sich mit den offenen Seiten im Abstand gegenüberliegenden, im wesentlichen U-förmigen Seitenwangen 17, 18 überdeckt. Nicht dargestellte Löcher in den Scharnierbandplatten 23 gewährleisten den Abfluß von am Fördergut haftender Flüssigkeit, z. B. Kühl- und/oder Schneidöl.

Die Schenkel 20a, 20b des U-förmigen Bodenblechs 20 sind mit gegenüber den horizontalen Abschnitten 21 der unteren Schenkel 22 der Seitenwangen 17, 18 abwärts abgebogenen Längskanten 38 durch Verschraubung oder Verschweißung verbunden. Hierdurch kann einerseits eine einwandfreie Abdichtung des Förderrahmens 11 für das von Metallspänen oder anderen Gegenständen aufgefangene Schneidöl oder dgl. sowie andererseits eine ausgezeichnete Aussteifung des Förderrahmens 11 erreicht werden. Bei einem Tropfkühlmittel, das am Ende des Scharnierbandförderers 10 abfließen kann, erübrigt sich eine Verschweißung des Bodenblechs 20 mit den Seitenwangen 17, 18. Dagegen ist eine dichte Verschweißung zwischen Bodenblech 20 und Seitenwangen 17, 18 für den Fall notwendig, daß der Spiegel der aufzufangenden Flüssigkeit höher als die Schenkel 22 für das Bodenblech 20 gewählt wird, um ein Absetzen von Verunreinigungen auf dem Bodenblech 20 und das Abfließen entsprechend gereinigter Flüssigkeit aus einer oberhalb des Bodenblechs 20 liegenden Öffnung des Förderrahmens 11 zu ermöglichen (nicht gezeigt).

Die Oberseite des waagerechten Abschnitts 21 der unteren Schenkel 22 der Seitenwangen 17, 18 bildet die Lauffläche für die Laufrollen 14, 15 des Scharnierbandes 13 im Leertrum.

Die oberen Schenkel 25 der Seitenwangen 17, 18 sind aus einem sich von deren Seitenwänden 16 nach innen im wesentlichen horizontal erstreckenden Abschnitt 26 gebildet, der sich, wie Fig. 2 zeigt, bis über die Oberseite der Seitenborde 24 des Scharnierbandes 13 im Arbeitstrum im Abstand etwa waagerecht hinweg erstreckt und danach schräg nach innen und unten zum Scharnierband 13 hin mit einem Abschnitt 27 in einem Winkel von etwa 45° gegenüber der Horizontalen abgebogen ist. Die freie Längskante 28 der oberen Schenkel 25 ist gegenüber dem vorstehend erwähnten abgebogenen Abschnitt 27 um 90° abgewinkelt und erstreckt sich nach unten und rückwärts zur Innenseite der zugeordneten Seitenborde 24 des Scharnierbandes 13 derart, daß etwa das obere Drittel der Höhe der Seitenborde 24 über den Rand 29 des Abschnitts 28 nach oben hinausragt. Durch diese Gestaltung des Profils der Seitenwangen 17, 18 wird das Fördergut stets zur Mitte des Scharnierbandes 13 hin abgelenkt, eine weitere Erhöhung der Verwindungssteifigkeit des Förderrahmens 11 und gleichzeitig eine ausgezeichnete Abdichtung zwischen den Seitenborden 24 im Arbeitstrum des Scharnierbandförderers und den Abschnitten 28 der Seitenwangen 17, 18 erzielt, die eine hohe Sicherheit gegen ein Eindringen von Metallspänen oder dgl. in den Förderrahmen 11 vermittelt. Die Krümmung des oberen Schenkels 25 kann auch abgerundet ausgeführt sein, solange sichergestellt ist, daß er nach innen gegen die Innenseite der zugehörigen Seitenborde 24 gerichtet ist und eine Ablenkung des Förderguts zur Mitte des Scharnierbandes 13 ermöglicht.

Die Förderrahmen-Abschnitte A und B stoßen im Bereich einer Verbindungslinie 30 mit den Stirnkanten ihrer Seitenwangen 17, 18 und Bodenbleche 20 gegeneinander und sind dort miteinander verschweißt. In ähnlicher Weise sind die Abschnitte B und C des Förderrahmens 11 im Bereich einer versetzten Schnittlinie 31 an ihren Stirnkanten miteinander verschweißt. Hierdurch ist es möglich, auf sehr einfache Weise entsprechend zugeschnittene Abschnitte des Förderrahmens 11 an ihren Stirnkanten durch Schweißen miteinander zu verbinden.

Die sich gegenüberliegenden Innenseiten der miteinander verschweißten Abschnitte A, B bzw. B, C des Förderrahmens 11 sind in diesen Umlenkbereichen des Scharnierbandes 13 durch je ein gekrümmtes Umlenkblech 33 bzw. 34 für die Laufrollen 14, 15 des Scharnierbandes 13 im Arbeitstrum bzw. im Leertrum verbunden. Zwei dem Arbeitstrum des Scharnierbandes 13 zugeordnete Führungsbleche 32 im Umlenkbereich zwischen dem unteren waagerechten Förderrahmenabschnitt A und dem schräg aufwärts gerichteten Förderrahmenabschnitt B des Scharnierbandförderers 13 sind an den Innenseiten der Seitenwangen 17, 18 befestigt und bilden die Fortsetzung der Laufbleche 19; sie weisen eine Bogenlänge auf, die sich nach beiden Enden der Führungsbleche 32 über die Punkte hinaus erstreckt, an denen die Längsachse der beiden gegeneinander abgewinkelten Förderrahmenabschnitte A, B an den gekrümmten Führungsblechen 32 eine Tangente bildet.

Dagegen sind die Enden des dem Leertrum zugeordneten Umlenkblechs 33 im Umlenkbereich zwischen den beiden Förderabschnitten A, B jeweils nur bis zu den Punkten geführt, an denen die Enden der Laufbleche 19 der gegeneinander abgewinkelten Abschnitte A, B des Förderrahmens 11 an dem Krümmungsbogen des Umlenkblechs 33 jeweils eine Tangente bilden. Auf diese Weise wird eine einwandfreie Führung der Laufrollen 14, 15 des Scharnierbandes 13 sowohl im Arbeitstrum als auch im Leertrum sichergestellt, und zwar auch dann, wenn insbesondere im Arbeitstrum Schwingungen auftreten.

Das dem Arbeitstrum zugeordnete Umlenkblech 34 im Umlenkbereich zwischen dem schräg aufwärts gerichteten Abschnitt B und dem oberen waagerechten Abschnitt C des Scharnierbandförderers 10 erstreckt sich in Längsrichtung desselben bis zu denjenigen beiden Punkten, an denen die Laufbleche 19 der beiden gegeneinander abgewinkelten Förderrahmenabschnitte B, C an dem Krümmungsbogen des Umlenkblechs 34 jeweils eine Tangente bilden.

Dagegen sind hier die beiden dem Leertrum zugeordneten Führungsbleche 35 an den sich gegenüberliegenden Innenseiten der Seitenwangen 17, 18 an ihren in Förderrichtung vorderen Enden an die waagerechten Schenkelabschnitte 21 der unteren Schenkel 22 der Seitenwangen 17, 18 angeschlossen, wobei sich die Führungsbleche 35 bis in den Umlenkbereich des Leertrums an der Antriebsstation M am Ende des oberen waagerechten Abschnitts C des Förderrahmens 11 hinein erstreckt. Durch diese Führungsbleche 35 im Bereich der aneinander angesetzten Abschnitte A, B, C des Förderrahmens 11 sowie der Umlenkung des Scharnierbandes 13 wird eine ausgezeichnete Führung desselben durch diese Umlenkbereiche sowie eine Aussteifung des Förderrahmens 11 erzielt.

Das Bodenblech 20 des oberen waagerechten Abschnitts C des Scharnierbandförderers 11 erstreckt sich etwa horizontal unterhalb der Führungsbleche 35 für das Leertrum des Scharnierbandes 13 in der Antriebsstation M in einem Abstand und auf einer Länge, die so bemessen sind, daß das Innere des Förderrahmens 13 durch eine Eingriffsöffnung 47 zugänglich ist. Da die Antriebsstation M gleichzeitig Austragsstation ist, ist auf diese Weise gewährleistet, daß ein Bedienungsmann ohne Gefahr einer Verletzung durch die Eingriffsöffnung 47 hindurch in das Innere des Förderrahmens 11 eingreifen und den Betriebszustand desselben überprüfen sowie ggf. reinigen kann.

An der Umlenkstation U erstrecken sich im Umlenkbereich des Arbeitstrums des Scharnierbandes 13 oberhalb desselben zwei gekrümmte Führungsbleche 36 bis zu den Laufblechen 19 an je einer Seitenwange 17, 18 des Förderers 10. Die in der Umlenkstation U liegenden hinteren Enden der Führungsbleche 36 sind über den Punkt der tangentialen Bührung des Umschlingungsbogens des Scharnierbandes 13 um ein Umlenkorgan 37 angeordnet, das als feste innere Umführungskurve, drehbare Umlenkscheibe oder als Kettenrad ausgebildet sein kann.

Dagegen sind die in Förderrichtung vorderen Enden der Führungsbleche 36 über den zur Längsrichtung des Förderers 10 tangentialen Punkt hinaus gekrümmt. Diese Führungsbleche 36 gewährleisten eine sichere Führung des Scharnierbandes 13 an der Umlenkstation U sowie eine erhöhte Steifigkeit der Seitenwangen 17, 18.

Um die Umlenkstation U ist das Bodenblech 20 von unten her vollständig herumgeführt und endet in Förderrichtung x hinter der Querschnittsebene, in der der Mittelpunkt des Umschlingungsbogens des Scharnierbandes 13 liegt. An dieses Ende des Bodenblechs 20 ist ein Schnurrenblech 39 angesetzt und mit den Seitenwangen 17, 18 so verschweißt, daß es sich schräg abwärts zum Scharnierband 13 hin bis zum unteren freien Rand 29 der gegen die Innenseite der Seitenborde 24 abgewinkelten Längskante 28 erstreckt. Das Schnurrenblech 39 verleiht der Umlenkstation U eine hohe Verwindungssteifigkeit und ermöglicht eine Aufgabe des Fördergutes sehr nahe am Ende der Umlenkstation U, ohne daß das Fördergut zwischen den Seitenborden 24 des Scharnierbandes 13 und den Seitenwangen 17, 18 in den Förderrahmen 11 eindringen kann.

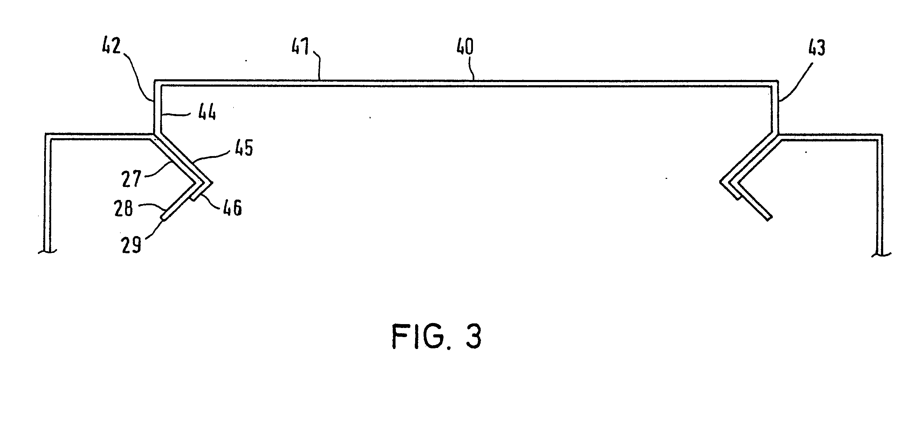

Fig. 3 zeigt ein Abdeckblech 40, das eine zur Hauptebene des Förderrahmens 11 parallele Hauptseite 41 und zwei dazu im wesentlichen abwärts gerichtete Seitenschenkel 42, 43 aufweist. Die Seitenschenkel 42, 43 bestehen aus einem oberen senkrechten Abschnitt 44, an den sich die mit dem Abschnitt 27 und der freien Längskante 28 der oberen Schenkel 25 der Seitenwangen 17, 18 zusammenwirkenden Abschnitte 45 und 46 anschließen. Es ist ersichtlich, daß die Abschnitte 45 ebenso wie die Abschnitte 27 gegenüber der Horizontalen in einem Winkel von etwa 45° zur Fördermitte hin abgewinkelt sind. Der Abschnitt 46 der Seitenschenkel 42, 43 des Abdeckblechs 40 ist wesentlich schmäler bemessen als die Abschnitte 28, im übrigen aber ebenfalls um 90° gegenüber dem Abschnitt 45 nach außen in Richtung der Innenseite der Seitenborde bzw. der Seitenwand der zugehörigen Seitenwange hin abgewinkelt, so daß die Seitenschenkel des Abdeckblechs mit den Abschnitten 45, 46 mit Rastsitz zwischen die sich gegenüberliegenden Abschnitte 27, 28 der oberen Schenkel 25 der Seitenwangen 17, 18 abdichtend eingreifen. Hierdurch wird eine außerordentlich einfache und schnelle Montage des Abdeckblechs 40 auf dem Scharnierbandförderer 10 erreicht, ohne daß besondere Befestigungselemente zwischen Abdeckblech 40 und Förderrahmen 11 erforderlich sind. Ebenso schnell läßt sich das Abdeckblech 40 wieder entfernen, wenn dies gewünscht wird. Selbstverständlich kann das Profil der Seitenschenkel 42, 43 ebenfalls abgerundet sein, wenn die Seitenwangen 17, 18 wie erwähnt, entsprechend gekrümmt sind.

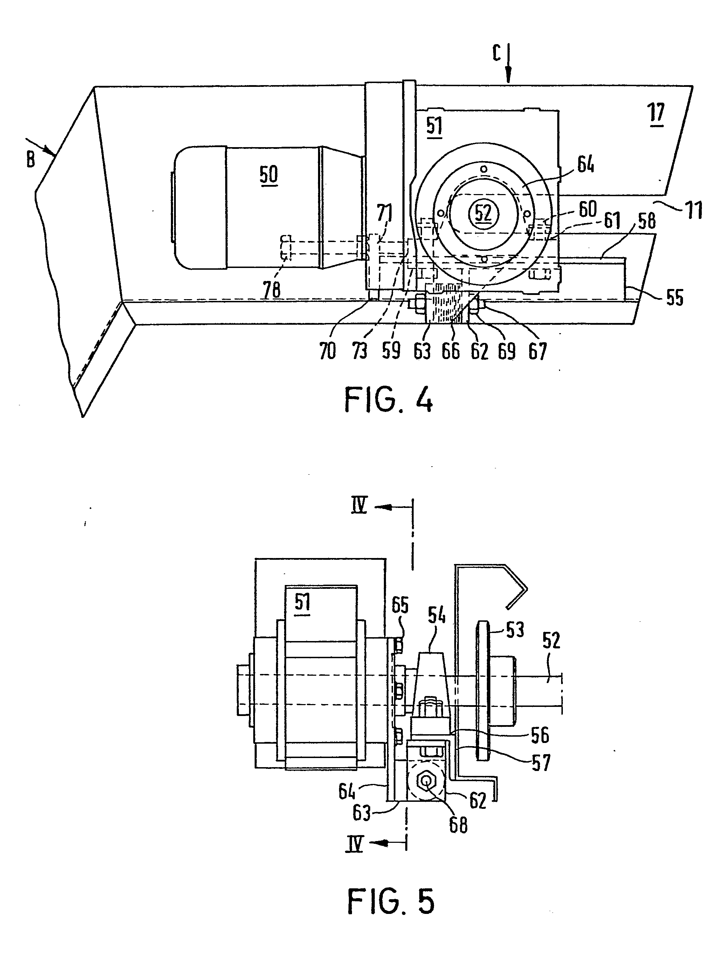

Gemäß Fig. 4 und 5 besteht die Antriebsstation M aus einem Antriebsmotor 50, der elektrisch oder hydraulisch antreibbar ist. Mit diesem Antriebsmotor ist ein Getriebe 51 verblockt, dessen Ausgang mit einer Antriebswelle 52 koaxial gekoppelt ist, auf der ein Antriebsorgan 53, z. B. ein Kettenrad, für das Scharnierband 13 im Bereich der beiden Seitenwangen 17, 18 jeweils drehfest verkeilt ist. Die Antriebswelle 52 ist an den beiden Außenseiten der Seitenwangen 17, 18 des Förderrahmens 11 in je einem Lagerbock gelagert, von denen in den Fig. 4 und 5 nur ein Lagerbock 54 zu sehen ist. Der Lagerbock 54 ist auf einer parallel zu der Längsrichtung des Förderrahmens 11 verlaufenden Tragleiste 55 abgestützt, die aus dem waagerechten Schenkel 56 eines mit dem anderen Schenkel 57 an die Außenseite der Seitenwangen 17 angeschweißten Winkelprofils besteht. Die Tragleiste 55 weist zwei Langlöcher 58 auf, die sich in Längsrichtung der Tragleiste 55 im Abstand voneinander erstrecken. Unterhalb der Tragleiste 55 ist ein Gegenblech 59 vorgesehen, das mit Gewindebohrungen versehen ist (nicht dargestellt), durch die sich Schraubenbolzen 60 quer nach oben erstrecken und dabei jeweils die Langlöcher 58 sowie nicht dargestellte Bohrungen in den Flanschen 54a, 54b der Lagerböcke 54 durchsetzen und mittels Muttern 61 verspannt sind.

Von dem Gegenblech 59 erstreckt sich nach unten ein Stützblech 62. Diesem Stützblech 62 liegt in Längsrichtung des Scharnierbandförderers 10 gesehen im Abstand in gleicher Höhe ein weiteres Stützblech 63 gegenüber, und zwar auf der dem mit der Antriebsstation M versehenen Ende des Scharnierbandförderers 10 abgekehrten Seite. Dieses Stützblech 63 ist, wie Fig. 5 zeigt, am unteren Ende einer Lochscheibe 64, die in einer zur Längsrichtung des Scharnierbandförderers 10 parallelen Ebene an der Stirnseite des Getriebes 51 mittels Schrauben 65 befestigt ist, in Richtung des Scharnierbandförderers 10 quer abgewinkelt. Zwischen den beiden Stützblechen 62, 63 ist ein auf Zug und Druck beanspruchbares Federelement 66 mittels einer Spannvorrichtung 67 axial verspannbar, die im vorliegenden Fall aus einem Gewindebolzen 68 besteht, der zwei waagerechte Bohrungen in den Stützblechen 62, 63 sowie das Federelement 66 durchsetzt und an der Außenseite der beiden Stützbleche 62, 63 mittels Muttern 69 gesichert ist.

Fig. 4 und 5 zeigen ferner, daß die Tragleiste 55 an ihrem dem Ende des Scharnierbandförderers 10 abgekehrten Ende eine quer zum Scharnierbandförderer 10 gerichtete Spannplatte 70 aufweist, die über die waagerechte Tragleiste 55 mit einem Abschnitt 70a über die Tragleiste 55 nach oben hinaus vorragt. Dieser Abschnitt 70a enthält eine Gewindebohrung 71, die sich waagerecht in Längsrichtung des Scharnierbandförderers 10 erstreckt und eine Spannschraube 72 aufnimmt, deren zum Ende des Scharnierbandförderers 10 hin gerichtetes freies Ende an einer dem benachbarten Ende des Scharnierbandförderers 10 abgekehrten Anschlagfläche 73 des zugeordneten Lagerbocks 54 anliegt, so daß dieser mit dem Antriebsmotor 50, dem Getriebe 51 und dem Federwiderlager 62, 63, 66 in Längsrichtung des Scharnierbandförderers 110 relativ zum Förderrahmen 11 verstellbar und diesem gegenüber axial festlegbar ist. Es ist somit ersichtlich, daß bei einer Verstellung des Antriebsblocks 50, 51 zum Spannen des Scharnierbandes 13 das gesamte, aus den beiden Stützblechen 62, 63 und dem Federelement 66 bestehende Federwiderlager gleichzeitig mitverstellt wird, so daß es nicht notwendig ist, nach einer Verstellung des Antriebsblocks 50, 51 eine gesonderte Nachstellung des Federwiderlagers vornehmen zu müssen.

Für den Fall, daß eine zusätzliche Aussteifung des Förderrahmens 11 gewünscht wird, können, wie in Fig. 2 angedeutet ist, Querstreben 48 vorgesehen sein, die sich zwischen den Laufblechen 19 an den sich gegenüberliegenden Innenseiten der Seitenwangen 17, 18 erstrecken. Vorzugsweise werden diese Querstreben 48 dann im Bereich der verschweißten Stoßstellen von zwei z. B. waagerechten Förderabschnitten angeordnet. Die Querstreben 48 können aus dem Material der Laufbleche 19 bestehen und mit Abschnitten derselben ggf. als Ganzes ausgebildet sein.

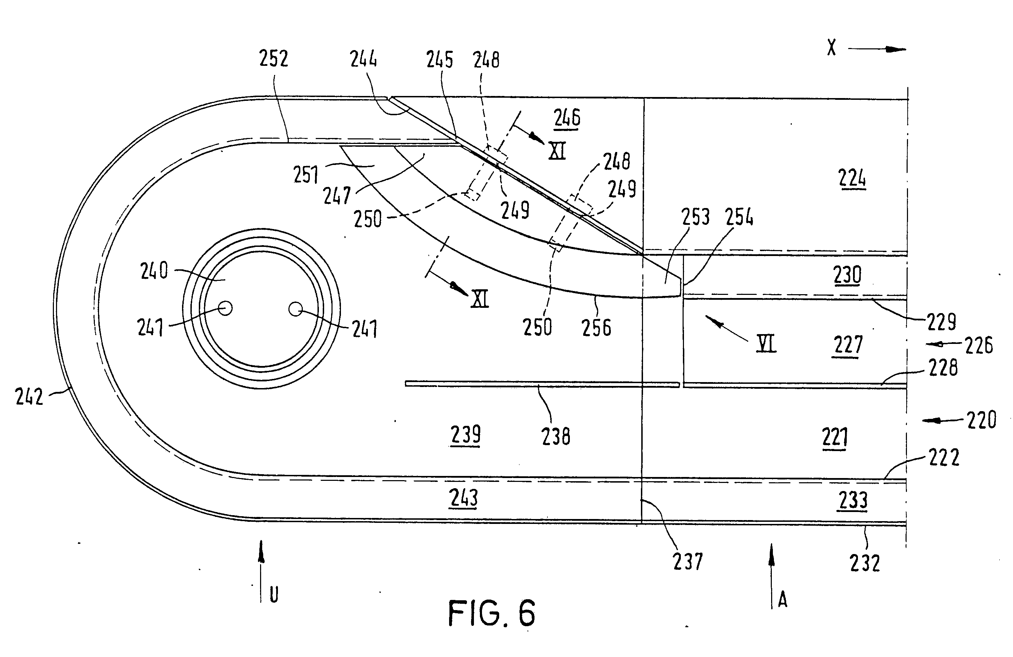

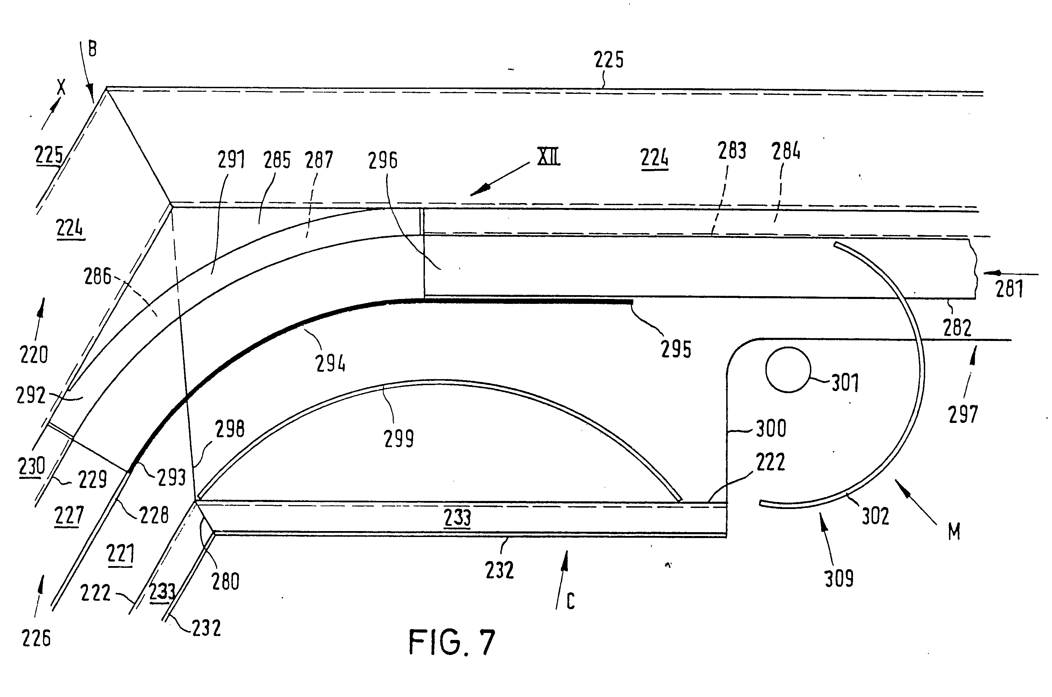

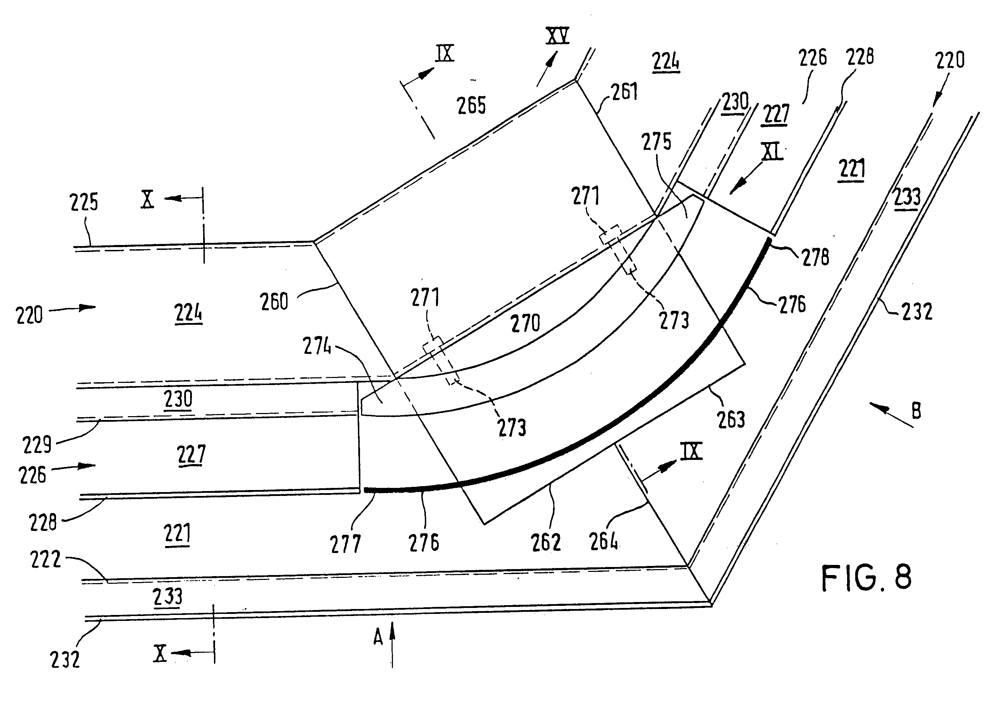

Unter Bezugnahme auf die Fig. 6, 7 und 8 setzt sich der Höhenförderer aus einem unteren waagerechten, vorderen, die Auftrag- bzw. Umlenkstation U enthaltenden Förderabschnitt A (Fig. 6), einem schräg aufwärts gerichteten Mittelabschnitt B (Fig. 7 und 8) sowie einem oberen waagerechten Endabschnitt C zusammen, der die Austrag- bzw. Antriebsstation M enthält.

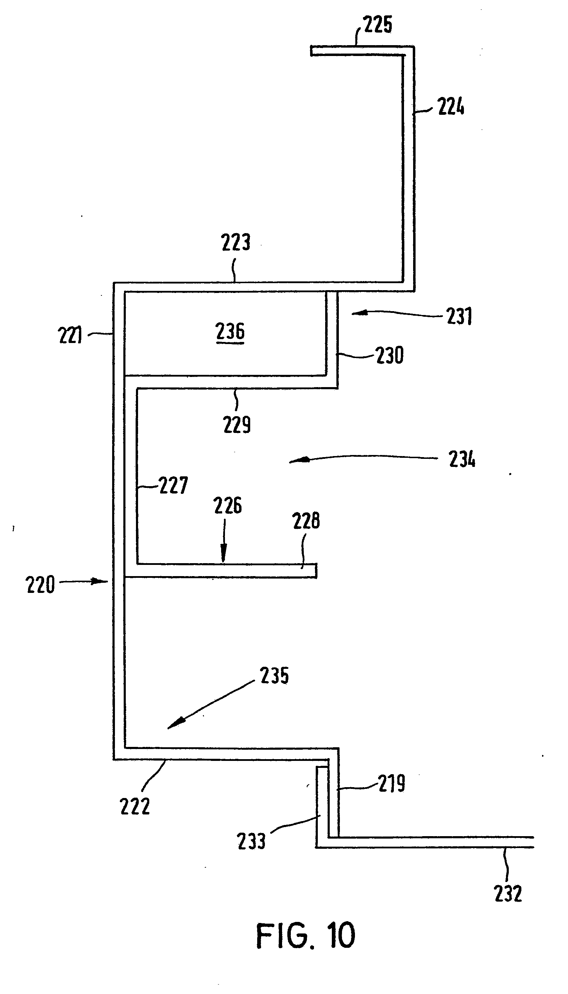

Der Förderrahmen setzt sich aus zwei Seitenwangen zusammen, von denen in Fig. 6 eine Seitenwange 220 gezeigt ist, deren senkrechte Hauptseite 221 einen unteren waagerechten Schenkel 222 und einen oberen waagerechten Schenkel 223 aufweist, die jeweils um 90° in Richtung der Mitte des Höhenförderers abgewinkelt sind. Das freie Ende 219 des unteren waagerechten Schenkels 222 ist nach unten abgewinkelt, während der obere waagerechte Schenkel 223 gegenüber dem unteren Schenkel 222 um ein Maß breiter bemessen ist, das die Breite der Seitenborde eines nicht dargestellten Scharnierbandes für den Höhenförderer etwas überschreitet. Der obere Schenkel 223 der Seitenwange 220 bildet eine senkrechte Schachtwand 224 auf einer Höhe, die dem Abstand zwischen Arbeitstrum und Umlenkung desselben entspricht. Das obere freie Ende 225 dieser Schachtwand 224 ist nach außen im rechten Winkel abgewinkelt und dient zur Befestigung eines Abdeckblechs, falls dies gewünscht wird (nicht gezeigt). An der Innenseite der Hauptseite 221 der Seitenwange 220 ist ein im wesentlichen U-förmiges Profilblech 226 mit seinem Steg 227 angeschweißt. Der untere Schenkel 228 dieses Profilblechs 226 steht von der Innenseite der Hauptseite 221 senkrecht nach innen vor und dient als Laufschiene für das Arbeitstrum des Scharnierbandes. Der obere Schenkel 229 des Profilblechs 226 erstreckt sich parallel zu dem unteren Schenkel 228 ebenfalls zur Mitte des Höhenförderers, wobei dessen freies Ende 230 rechtwinklig nach oben gegen die Unterseite des oberen Schenkels 223 der Seitenwange 220 an einer Stelle abgebogen und gegebenenfalls verschweißt ist, die von dem Ende des oberen Schenkels 223 einen Abstand einnimmt, der eine freie Beweglichkeit der Seitenborde des Scharnierbandes in dem rechtwinkligen Profilausschnitt 231 ermöglicht. Das nach oben abgewinkelte Ende 230 liegt etwa in einer gemeinsamen senkrechten Ebene mit dem nach unten abgewinkelten Ende 219 des unteren Schenkels 222 der Seitenwange 220. Ein Bodenblech 232 des Höhenförderers ist im Querschnitt U-förmig ausgebildet, wobei von seinen beiden Schenkeln der Schenkel 233 in Fig. 10 ersichtlich ist, der das nach unten abgewinkelte Ende des unteren Schenkels 222 der Seitenwange 220 außen umgreift und mit diesem entweder durch Schweißen angepunktet oder auf ganzer Länge dicht verschweißt ist, und zwar je nach den Anforderungen an die Dichtigkeit des Förderrahmens. Es ist somit ersichtlich, daß das Profilblech 226 einen Führungskanal 234 für das Arbeitstrum des Scharnierbandes bildet, während der untere Schenkel 228 des Profilblechs 226 zusammen mit dem unteren Schenkel 222 der Seitenwange 220 und einem Teil von deren Hauptseite 221 einen darunterliegenden Führungskanal 235 für das Leertrum des Scharnierbandes bilden, dessen Seitenborde, wie bereits erwähnt, in dem Profilausschnitt 231 unterhalb des oberen Schenkels 223 der Seitenwange 220 eingreifen und durch diesen geschützt sind, während andererseits das nach oben abgewinkelte Ende 230 des Profilblechs 226 gegebenenfalls eine seitliche Führung oder Anschlagfläche für die Seitenborde des Scharnierbandes sowie einen Abschluß für einen Hohlraum 236 des Höhenförderers bildet. Es versteht sich, daß der in Fig. 10 dargestellten Seitenwange 220 eine entsprechende Seitenwange spiegelbildlich im Abstand gegenüberliegend angeordnet und ebenfalls mit dem Bodenblech 232 an dessen anderem aufwärtsgerichteten, nicht gezeigten Schenkel befestigt ist.

Die Seitenwangen 220 erstrecken sich im Bereich des unteren waagerechten Förderabschnitts A des Höhenförderers bis zu einer senkrechten Nahtstelle 237, an der an die Stirnenden der Seitenwangen 220 die Umlenkstation U angeschweißt ist. Es ist ersichtlich, daß das Profilblech 226 im Abstand vor der Nahtstelle 237 endet und daß in Höhe des unteren waagerechten Schenkels 228 des Profilblechs 226 ein der Breite des Schenkels 228 etwa entsprechendes gerades Führungsblech 238 jeweils an der Innenseite der Hauptseite 221 der Seitenwangen 220 und an der Innenseite der Seitenwange 239 der Umlenkstation U angeschweißt ist. Das der Umlenkstation U zugekehrte Ende des Führungsblechs 238 endet im Abstand vor einem Umlenktopf 240 für das Scharnierband, der zweckmäßig aus einem Blech tiefgezogen und auf einer Symmetrieachse mit zwei Löchern 241 versehen ist, die ein Umsetzen des Umlenktopfes 240 durch Drehung um 180° in oder entgegen dem Uhrzeigersinn ermöglichen, wenn der eine vom Scharnierband beanspruchte Umfangsabschnitt des Umlenktopfes 240 verschlissen ist, was lediglich durch Lösen von nicht gezeigten Schrauben auf einfache Weise bewerkstelligt werden kann. Hierdurch wird eine doppelte Lebensdauer der Umlenkung bei einfacher Wartung erreicht.

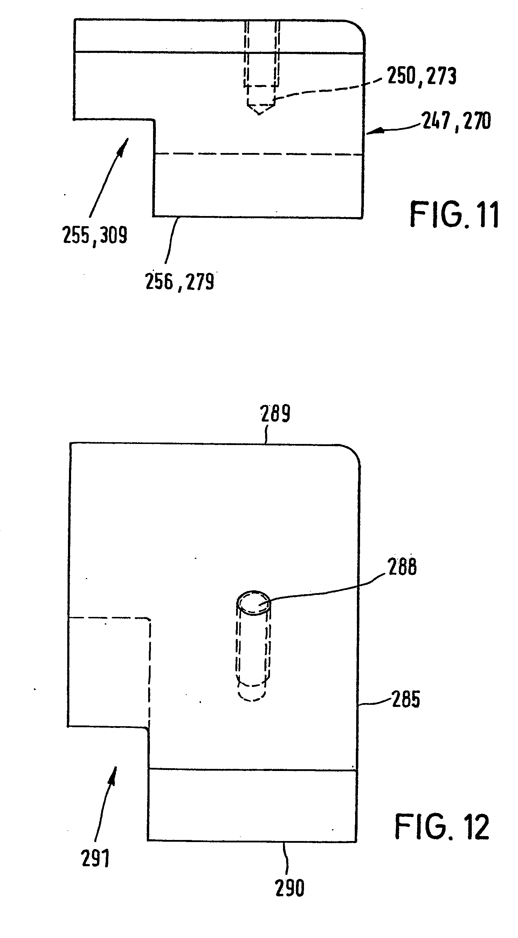

Es ist ferner ersichtlich, daß die Umlenkstation U an der Außenseite ein den Seitenwangen 220 entsprechendes Profil aufweist, wobei lediglich in Fortsetzung des Bodenblechs 232 ein gekrümmtes Abdeckblech 242 die Umlenkstation U ganzteilig umgibt und mit dem nach außen abgewinkelten Rand 243 fest verbunden ist. Im Bereich des oberen, unter Berücksichtigung des Umschlingungsradius höher liegenden Endes 244 ist die Seitenwange 239 der Umlenkstation U schräg abwärts in Richtung der Nahtstelle 237 in Höhe des oberen Schenkels 223 der Seitenwange 220 schräg abgeschnitten und mit einem Schnurrenblech 245 verschweißt, das sich quer über den Höhenförderer erstreckt und ebenso mit der anderen Seitenwange 239 der Umlenkstation U verschweißt ist. Auf der Oberseite des Schnurrenblechs 245 ist ein senkrechtes Winkelstück 246 vorgesehen, das in der Ebene der Schachtwand 224 der Seitenwangen 220 des Förderrahmens verläuft und mit deren Oberkante fluchtet und an der Nahtstelle 237 mit der Schachtwand 224 verschweißt ist. Das Schnurrenblech 245 erstreckt sich auf einer dem oberen Schenkel 223 der Seitenwange 220 entsprechenden Breite hinter dem Winkelstück 246, also hinter der Zeichenebene in Fig. 6 und ist dort an der Unterseite mit einem massiven Kurvenstück 247 durch Kopfschrauben 248 lösbar verbunden, die sich durch Löcher 249 des Schnurrenblechs 245 hindurch in Gewindebohrungen 250 des Kurvenstücks 247 erstrecken. Das Kurvenstück 247 ist an seinem oberen Ende 251 waagerecht abgeschnitten und liegt an der Unterseite eines dem unteren Schenkel 222 der Seitenwange 220 entsprechenden Schenkels 252 der Seitenwange 239 der Umlenkstation U an. Das andere Ende 253 des Kurvenstücks 247 erstreckt sich über die senkrechte Nahtstelle 237 hinaus bis an das in Förderrichtung des Pfeiles x vordere Ende 254 des Profilblechs 226 auf einer Breite und Höhe, die etwa dem Hohlraum 236 der Seitenwange 220 entspricht, wie die Endansicht in Fig. 11 gemäß Pfeil VI in Fig. 6 erkennen läßt. Die etwa rechteckige Aussparung 255 entspricht dem Profilausschnitt 231 der Seitenwange 220 für die Seitenborde des Scharnierbandes und erstreckt sich entsprechend der unteren Kurvenfläche 256 des Kurvenstücks 247 bogenförmig vom in Förderrichtung x vorderen Ende 251 des Kurvenstücks 247. Das Kurvenstück 247 ist spiegelbildlich in gleicher Weise an der anderen Seitenwange 239 der Umlenkstation U befestigt und vermittelt der Umlenkstation U eine zusätzliche Verwindungssteifigkeit sowie eine hohe Lebensdauer infolge einer erheblichen Verschleißfestigkeit. Gleichzeitig ist durch die Verschraubung dieser Kurvenstücke 247 mit dem Schurrenblech 245, ähnlich wie bei den an beiden Seiten der Seitenwangen 239 der Umlenkstation U angebrachten Umlenktöpfen 240, ein schnelles Umsetzen oder Austauschen möglich.

Während die Überbrückung der Nahtstelle 237 durch das Führungsblech 238 und die damit verbundene Verschweißung desselben mit der Innenseite sowohl der Seitenwange 220 des Förderabschnitts A des Höhenförderers sowie der Seitenwange 239 der Umlenkstation U dem Förderabschnitt eine höhere Steifigkeit vermittelt, ist ersichtlich, daß eine an den Schnittpunkt der Kurvenfläche 256 des Kurvenstücks 247 mit der Nahtstelle 237 gelegte Tangente horizontal verläuft und die Kurvenfläche 256 in Richtung des hinteren Endes 253 aufwärts, d. h. aus der Bewegungsbahn des Arbeitstrums des Scharnierbandes, herausgeführt ist. Auf diese Weise wird ein einwandfreier Übergang bei der Bewegung des Arbeitstrums vom Kurvenstück 247 in das den Führungskanal 234 bildende Profilblech 226 gewährleistet.

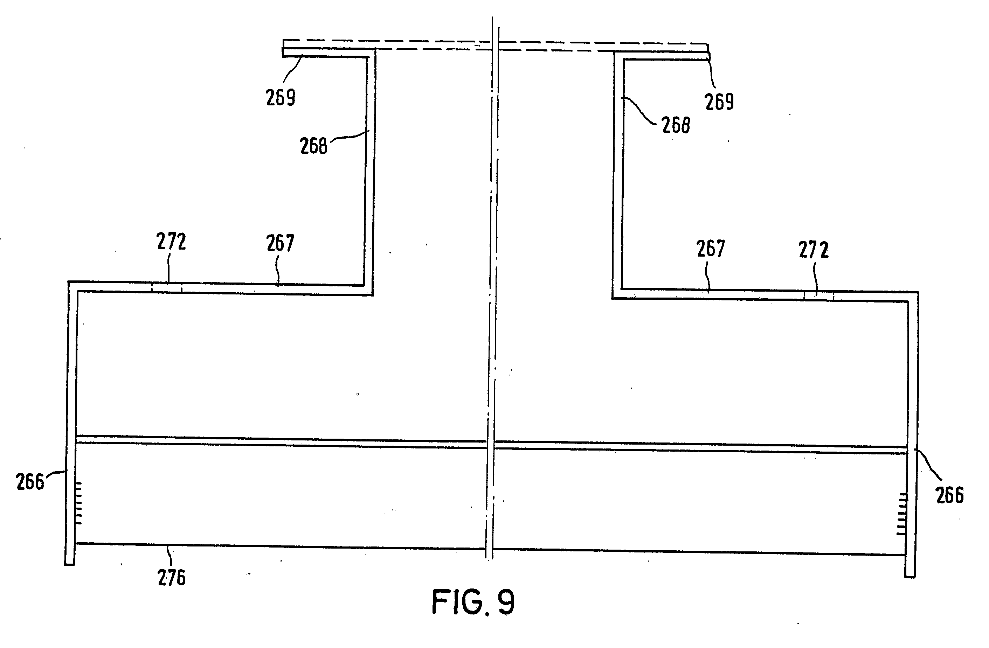

Gemäß Fig. 8 sind die Seitenwangen 220 des Förderabschnitts A sowie des schräg aufwärts gerichteten Mittelabschnitts B des Höhenförderers jeweils mit einem rechtwinkligen Ausschnitt 260, 262; 261, 263 versehen, wobei die gegeneinander gerichteten Schnittkanten 262 bzw. 263 miteinander fluchten und sich im rechten Winkel zu einer Nahtstelle 264 zwischen den Seitenwangen 220 der benachbarten Förderabschnitte A und B erstrecken. Der von den Schnittkanten 260, 261, 262 und 263 gebildete Ausschnitt ist symmetrisch zur Nahtstelle 264 angeordnet und nimmt ein Zwickelblech 265 auf, das vorzugsweise eine größere Wandstärke als die Seitenwangen 220 aufweist und mit den genannten Schnittkanten 260, 261, 262, 263 verschweißt ist. Das Zwickelblech 265 ist in der Ansicht gemäß Fig. 8 demnach rechtwinklig ausgebildet, weist aber, wie Fig. 9 zeigt, ein Querprofil auf, dessen unterer, abwärtsgerichteter Schenkel 266 etwa mit der Hauptseite 221 der Seitenwände 220 der beiden Förderabschnitte A und B fluchtet, während eine Querschulter 267 der sich paarweise gegenüberliegenden Zwickelbleche 265 mit den Schenkeln 223 der Seitenwangen 220 verschweißt ist. Die sich daran anschließenden Schachtwände 268 der Zwickelbleche 265 fluchten mit den Schachtwänden 224 der Seitenwangen 220 und sind mit diesen verschweißt. Obere, nach außen abgewinkelte Enden 269 der Schachtwände 268 der Zwickelbleche 265 sind mit ihren Stirnseiten an die abgewinkelten Enden 225 der Schachtwände 224 angeschweißt. Infolgedessen entspricht das Profil der Zwickelbleche 265 demjenigen der Seitenwangen 220 von deren Hauptseite 221 an aufwärts gesehen, jedoch unter Weglassung des Profilblechs 226, das an dieser Umlenkstelle ebenfalls durch ein Kurvenstück 270 ersetzt wird, das mit der Unterseite der Querschulter 267 mittels Schrauben 271 verschraubt ist, die Löcher 272 (Fig. 9) durchsetzen und in Gewindebohrungen 273 in dem Kurvenstück 270 eingreifen. Das in Förderrichtung des Pfeiles x vordere Ende 274 sowie das hintere Ende 275 des Kurvenstücks 270 sind über den Punkt hinausgeführt, an dem eine an den Krümmungsbogen gelegte Tangente jeweils in Längsrichtung der Förderabschnitte A bzw. B verläuft, so daß auch hier einwandfreie Übergänge bei der Bewegung des Arbeitstrums aus einem Führungskanal 234 des Förderabschnitts A in den Führungskanal 234 des Mittelabschnitts B des Höhenförderers gewährleistet sind. Auch hier ist das Kurvenstück 270 entweder gegossen oder geformt, so daß es hoch verschleißfest ist, andererseits aber leicht ausgetauscht werden kann. Dabei besteht weiter die Möglichkeit, das jeweils in Förderrichtung linke und rechte Kurvenstück 270 auszutauschen, da die Verschraubung symmetrisch zur Nahtstelle 264 vorgesehen ist, falls z. B. ein Verschleiß im wesentlichen nur auf dem in Förderrichtung vor der Nahtstelle 264 liegenden Abschnitt der Kurvenstücke 270 eintritt. Fig. 11 zeigt ebenfalls die Endansicht des Kurvenstücks 270 in Richtung des Pfeils XI in Fig. 8 mit der Kurvenfläche 279 und Aussparung 309 für die Seitenborde im Arbeitstrum des Scharnierbandes.

Die in die benachbarten Enden der sich gegenüberliegenden Seitenwangen 220 der Förderabschnitte A und B eingeschweißten Zwickelbleche 265 sind ebenso wie die äußeren, mit dem Zwickelblech 265 verschweißten Enden der Seitenwangen 220 mit den Längskanten einer Bogentraverse 276 verschweißt, deren Vorderkanten 277 bzw. Hinterkante 278 mit den Stirnflächen der Enden 274 bzw. 275 des Kurvenstücks 270 in einer gemeinsamen Querebene der Förderabschnitte A bzw. B enden und ebenso wie das Kurvenstück 270 über den Punkt hinaus mit ihren Enden gekrümmt sind, an dem eine an den Krümmungsbogen der Bogentraverse 276 angelegte Tangente genau in Längsrichtung des zugehörigen Förderabschnitts A bzw. B verläuft. Da die Bogentraverse 276 den Förderkanal 235 für das Leertrum des Scharnierbandes im Bereich der Abwinklung zwischen den beiden Förderabschnitten A, B nach oben begrenzt, ist auf diese Weise auch ein stoßfreier Übergang des Leertrums bei dessen Bewegung um die Bogentraverse 276 herum gewährleistet. Infolge der Verschweißung der Bogentraverse 276 mit den benachbarten Förderabschnitten A, B und dem Zwickelblech 265 auf jeder Seite des Förderrahmens und infolge der den Seitenwangen 220 angepaßten Profilierung des Zwickelblechs 265 und des mit diesem verschraubten massiven Kurvenstücks 270 wird dem Förderrahmen im Bereich der Abwinklung zwischen seinen beiden Förderabschnitten A und B eine besonders hohe Biege- und Verwindungssteifigkeit vermittelt.

Gemäß Fig. 7 sind die gegeneinander gerichteten Enden der Seitenwangen 220 der beiden Förderabschnitte B und C an einer Nahtstelle 280 unmittelbar miteinander verschweißt. Das in Förderrichtung x hintere Ende des Profilblechs 226 endet in dem Förderabschnitt B in weitem Abstand vor der Nahtstelle 280, während ein Z-förmiges Profilblech 281 in weitem Abstand hinter der Nahtstelle 280 an der Innenwand der Hauptseite 221 der Seitenwange 220 des oberen waagerechten Endabschnitts C des Höhenförderers an einem senkrechten Schenkel 282 angeschweißt ist, dessen Höhe etwa der Höhe des Steges 227 des U-förmigen Profilblechs 226 in den Förderabschnitten A und B entspricht, und dessen Querschenkel 283 etwa so breit wie der obere waagerechte Schenkel 229 des Profilblechs 226 bemessen ist, wobei der nach oben abgewinkelte Schenkel 284 des Z-förmigen Profilblechs 281 etwa dem nach oben abgewinkelten Ende 230 des U-Profilblechs 226 entspricht und etwa in dessen Ebene angeordnet ist. An die Unterseite der oberen Schenkel 223 der Seitenwangen 220 der beiden Förderabschnitte B und C ist im Bereich ihrer Abwinklung oder Nahtstelle 280 wiederum gegossenes oder geformtes Kurvenstück 285 eingesetzt, das mittels nicht dargestellter, im Bereich der gezeigten Achsen 286 bzw. 287 vorgesehener und in Verbindung mit den oben genannten Kurvenstücken 270 beschriebenen Kopfschrauben 271 mit den benachbarten Seitenwangen 220 lösbar verbunden ist. Da dieses Kurvenstück 285 einem geringeren Verschleiß ausgesetzt ist, kann es auch aus Kunststoff bestehen.

In der Endansicht des Kurvenstücks 285 gemäß Fig. 12 ist das der Seitenwange 220 des Förderabschnitts C zugeordnete Gewindeloch 288 erkennbar, wobei, wie bei den weiter oben beschriebenen Kurvenstücken 247, 270, die Oberseite 289 etwa der Breite der Unterseite der oberen Schenkel 223 der Seitenwangen 220 entspricht, während die untere, gekrümmte, sowie den Führungskanal 234 für das Arbeitstrum an der Oberseite begrenzende Fläche 290 eine Breite aufweist, die wiederum etwa der Breite des oberen Schenkels 229 des U-förmigen Profilblechs 226 im Förderabschnitt B bzw. des Querschenkels 283 des Z-förmigen Profilblechs 281 im Förderabschnitt C entspricht. Der rechtwinklige Ausschnitt 291 dient wiederum der Aufnahme oder Führung der Seitenborde des Scharnierbandes. Die Oberseite 289 des Kurvenstücks 285 füllt den Eckraum unterhalb der oberen Querschenkel 283 der gegeneinander abgewinkelten Seitenwangen der Förderabschnitte B, C vollständig aus, so daß dieser Raum sich mit Fördergut nicht vollsetzen kann.

In der Querebene der Stirnfläche des in Förderrichtung x vorderen Endes 292 des Kurvenstücks 285 liegt die vordere Stirnkante 293 einer weiteren Bogentraverse 294, die mit ihren beiden zueinander parallelen, sich in Längsrichtung des Höhenförderers erstreckenden Seitenkanten mit den benachbarten Enden der Seitenwangen 220 dieser Förderabschnitte B, C unter Überbrückung der Nahtstelle 280 verschweißt ist. Die Krümmung der Bogentraverse 294 verläuft wiederum parallel zu der unteren Fläche 290 des Kurvenstücks 285. Das in Förderrichtung x hintere Ende 295 der Bogentraverse 294 ist jedoch weit über das in Förderrichtung x vordere Ende 296 des Z-förmigen Profilblechs 281 hinaus bis in die Nähe der Ecke eines etwa rechtwinkligen Ausschnittes 297 in der Seitenwange 220 sowie aus der Bewegungsbahn des Arbeitstrums schräg abwärts herausgeführt. Infolgedessen ist das Arbeitstrum des Scharnierbandes soweit wie notwendig geführt, während andererseits der obere waagerechte Endabschnitt des Höhenförderers eine außerordentlich hohe Biege- und Verwendungssteifigkeit erhält.

Im Bereich der Nahtstelle 280 ist in Fluchtrichtung des unteren Schenkels 222 der Seitenwangen 220 des Mittelabschnitts B des Höhenförderers das in Förderrichtung x vordere Ende 296 eines Führungsblechs 299 auf dem unteren Schenkel 222 der Seitenwangen 220 des oberen Endabschnitts C angeschweißt, das bogenförmig etwa parallel zu der Bogentraverse 294 bis zu einem Punkt geführt ist, an dem eine an das Führungsblech 299 gelegte Tangente in Längsrichtung des oberen waagerechten Endabschnitts C des Höhenförderers gerichtet ist. Von diesem Punkt an, der etwas hinter dem Vorderende 296 des Z-förmigen Profilblechs 281 liegt, ist das Führungsblech 299 bogenförmig abwärts auf den unteren Schenkel 222 der Seitenwangen 220 des Förderabschnitts C in der Nähe einer abwärts gerichteten Schnittkante 300 des Ausschnitts 297 zurückgeführt. Infolge dieser Ausbildung der Bogentraverse 294 und des Führungsblechs 299, die den Führungskanal 235 für das Leertrum an der Ober- und Unterseite begrenzen, ist dessen Einlauföffnung im Bereich der Antriebsstation M wesentlich breiter bemessen als seine normale, durch das Querprofil der Seitenwange 220 in Fig. 10 dargestellte Höhe, so daß ein einwandfreier Einlauf des Leertrums in den Führungskanal 235 gewährleistet ist. Hierdurch ist es gleichzeitig möglich, Fördergutreste, die sich erst im Bereich des Einlaufs in den Führungskanal 235 für das Leertrum von diesem ablösen, leicht von der sich zur rückwärtigen Öffnung des Höhenförderers neigenden Oberfläche der Führungsbleche 299 bzw. vom Bodenblech 232 des Höhenförderers zu entfernen. Gleichzeitig dienen diese Führungsbleche 299 auch als Versteifungsrippen für die Seitenwangen 220 des Endabschnitts C des Höhenförderers.

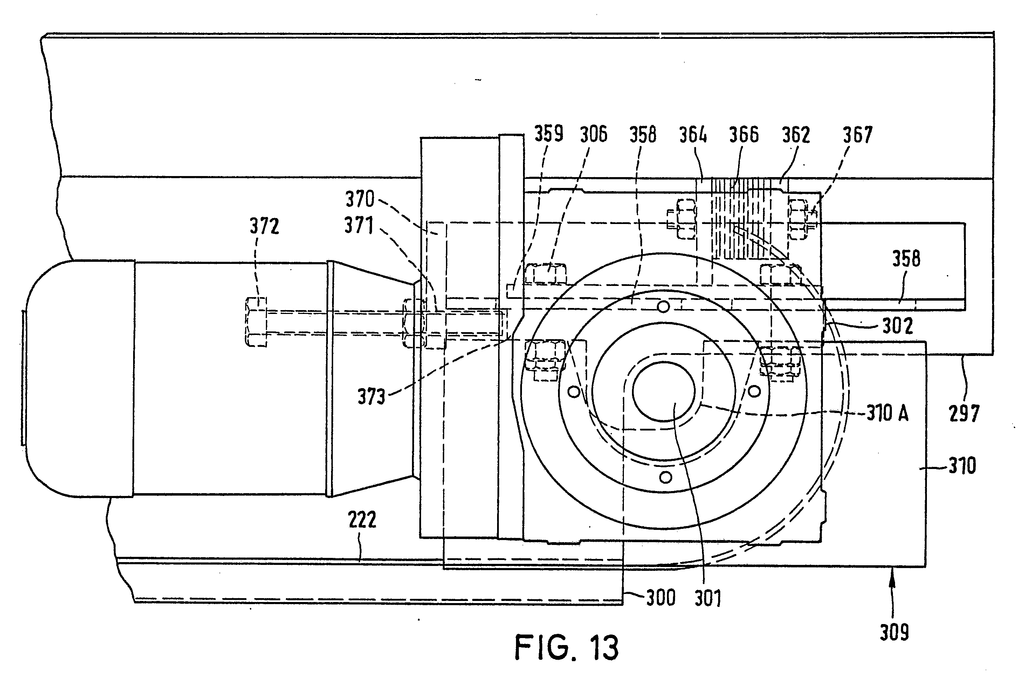

In Fig. 7 ist ferner eine Antriebswelle 301 und deren Lage in bezug auf den Ausschnitt 297 angedeutet sowie ferner ein Kettenschutz 309, auf den ebenfalls nachstehend in Verbindung mit den Fig. 13 bis 15 näher eingegangen werden soll.

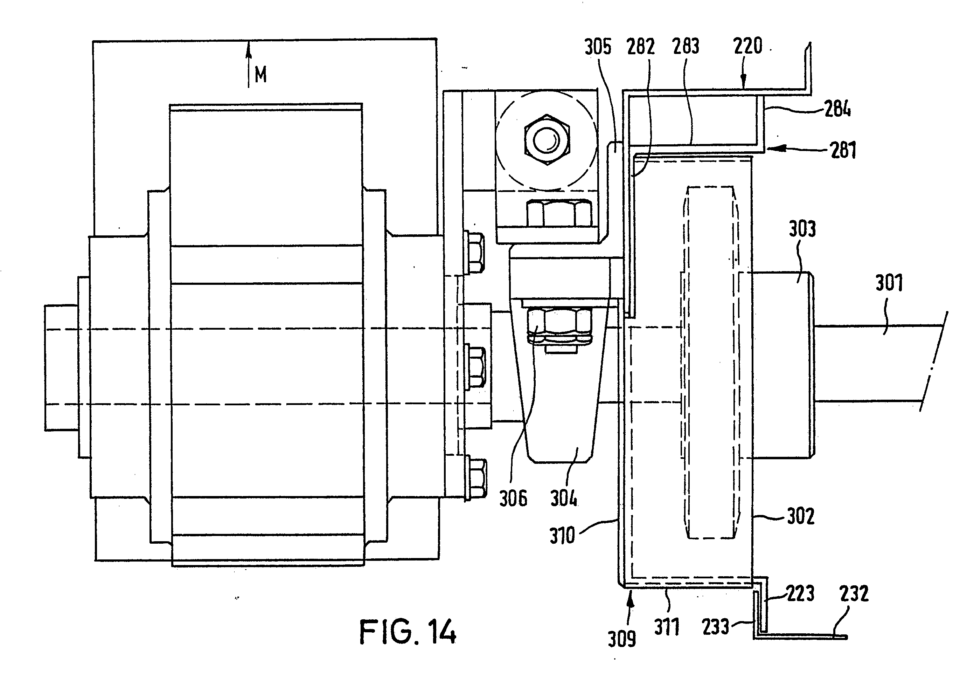

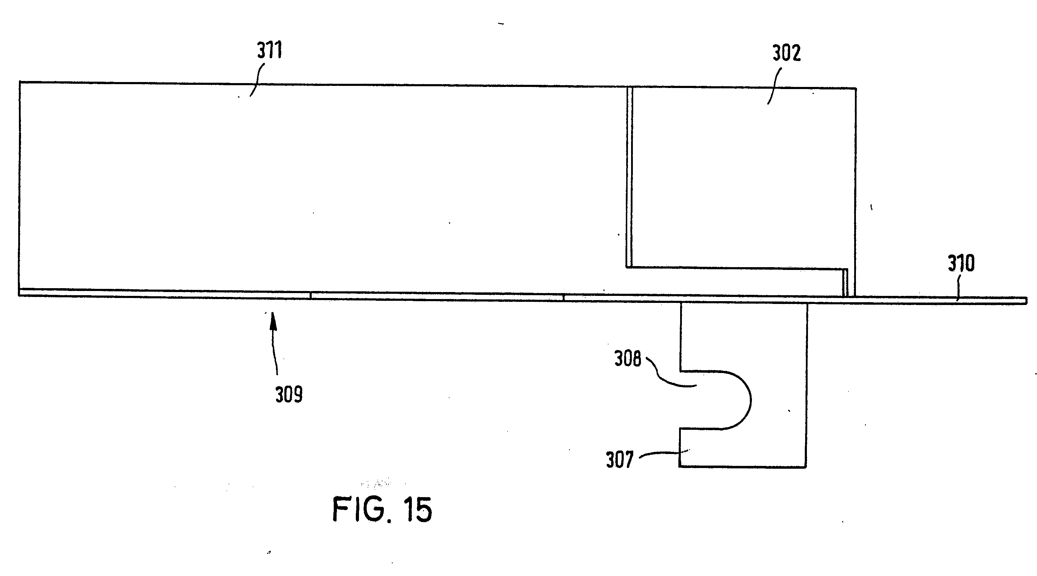

Gemäß Fig. 14 trägt die Antriebswelle 301 im Bereich der beiden Seitenwangen 220 der Antriebs- bzw. Austragstation M je ein Kettenzahnrad, von denen in Fig. 14 ein Kettenzahnrad mit 303 bezeichnet ist. Die über die beiden Außenseiten der Seitenwangen 220 hinausragenden Wellenenden sind jeweils in einem Lagerbock 304 gelagert, der an der Unterseite eines waagerechten Flansches einer winkelförmigen Tragleiste 305 mittels einer Schraubverbindung 306 befestigt ist, wobei der andere Flansch der Tragleiste 305 an der Außenseite der Hauptseite 221 jeder Seitenwange 220 befestigt ist. Die in Fig. 14 dem Ende des Höhenförderers zugekehrte Schraubenverbindung 306 dient zur Befestigung einer Befestigungslasche 307 (Fig. 15) des Kettenschutzes 309, die an der dem Höhenförderer abgekehrten Seite mit einem langen Einschnitt 308 zum Eingriff des Schraubenbolzens der Schraubenverbindung 306 versehen ist und an der Oberkante der Außenseite eines Abschirmblechs 301 angeschweißt ist, das sich im rechten Winkel zu der Befestigungslasche 307 parallel zur Hauptseite der Seitenwange 220 erstreckt und mit ihrem Außenrand den Ausschnitt 297 in der Seitenwange 220 überdeckt. Der obere Rand des Abschirmblechs 310 ist mit einem Einschnitt 310a versehen, der die Antriebswelle 301 von unten und den Seiten im Abstand umgreift. Ein Kettenschutzblech 302 ist mit einer Seitenkante an der Innenseite des Abschirmblechs 310 in radialem Abstand vom Umfang des antreibenden Kettenzahnrades 303 angeschweißt und erstreckt sich mit seinem oberen Ende über die Oberkante des Abschirmblechs 310 hinaus bis zur Unterseite des Querschenkels 283 des Z-förmigen Profilblechs 281 an der Innenseite der Seitenwangen 220 des Endabschnitts C des Höhenförderers. Die Fig. 13 bis 15 lassen erkennen, daß das obere, über die Oberkante des Abschirmblechs 310 hinausragende Ende des bogenförmigen Kettenschutzblechs 302 schmaler ausgebildet ist als der mit dem Abschirmblech 310 verschweißte untere Teil. Hierdurch ist es möglich, das obere, sich über die obere Kante des Abschirmblechs 310 hinaus erstreckende Ende des gekrümmten Kettenschutzblechs 302 an dem senkrechten Schenkel 282 vorbei bis gegen die Unterseite des oberen waagerechten Querschenkels 283 des Z-förmigen Profilblechs 281 zu führen und auf diese Weise einen vollkommenen Berührungsschutz des Kettenantriebs zu erreichen. Da das Kettenschutzblech 302 am unteren Ende des Abschirmblechs 310 zur Innenseite des Höhenförderers einen waagerechten Schenkel 311 bildet, ist die Unterseite des Höhenförderers im Bereich des Kettenantriebs auch an dem Ausschnitt 297 der Seitenwangen 220 von unten her abgedeckt und das Bedienungspersonal demnach vor einer Verletzung durch Berührung des Kettenantriebs geschützt.

Durch die Verbindung des Abschirmblechs 310 mit dem Lagerbock 304 für die Antriebswelle 301, die ihrerseits in üblicher Weise mit einem Antriebsblock M gekuppelt ist, wird beim Spannen des Scharnier- oder Transportbandes das Abschirmblech 310 automatisch in Längsrichtung des Höhenförderers mitverstellt, so daß sich ein Lösen oder ein besonderes Umsetzen der Kettenabschirmung bei einer Längsverstellung der Antriebswelle 301 im Sinne eines Spannens des Scharnierbandes erübrigt.

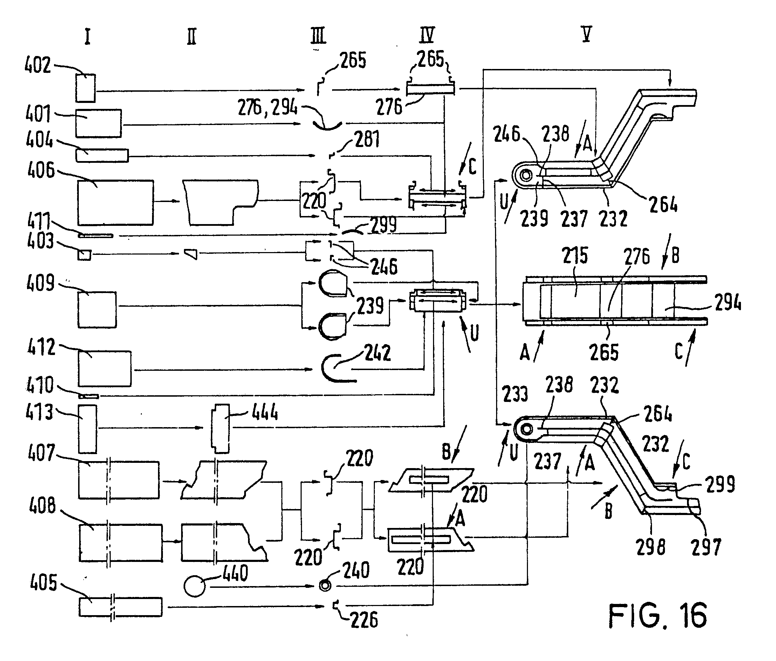

Anhand der Fig. 16 wird nachstehend die Herstellung des erfindungsgemäßen Höhenförderers beschrieben. In einer Ausgangsstufe I im linken Teil der Fig. 1 werden dreizehn Ausgangsbleche 401 bis 413 auf einer bestimmten, für den herzustellenden Höhenförderer erforderlichen Breite sowie in der notwendigen Länge von nicht dargestellten Bandblechrollen abgeschnitten und für die Verfahrensstufe II bereitgestellt, in der die Ausgangsbleche 403, 406, 407, 408 und 413 abgekürzt bzw. an den Enden in dem notwendigen Ausmaß konturiert werden.

In der nachfolgenden Herstellungsstufe III werden sämtliche genannten Bleche mit Ausnahme des Bleches 413, das bereits in der Arbeitsstufe II montagefertig ist, gebogen bzw. tiefgezogen. So werden aus den Ausgangsblechen 401 die Bogentraversen 276 und 294 (Fig. 2, 3) hergestellt, die Ausgangsbleche 402, die die Zwickelbleche 265 bilden, den Seitenwangen 220 entsprechend zueinander spiegelbildlich profiliert, ebenso die Winkelstücke 246 für die Umlenkstation U und die Ausgangsbleche 404 zu den Z-förmigen Profilblechen 281 sowie die Bleche 405 zu den U-förmigen Profilblechen 226 gebogen. Die Ausgangsbleche 406, 407 und 408 werden jeweils auf das Profil jeder der beiden Seitenwangen 220 des Förderers gebogen. Dagegen werden die Ausgangsbleche 409 durch Tiefziehen auf die Form der Seitenwangen 239 an der Umlenkstation U gebracht. Darüber hinaus wird ein in der Arbeitsstufe II eingeführtes kreisscheibenförmiges Blech 440 in zweifacher Ausfertigung jeweils auf den Umlenktopf 240 tiefgezogen und mit den beiden Löchern 241 für die Befestigungsschrauben versehen. Die Ausgangsbleche 411 werden den Führungsblechen 299 in Fig. 2 entsprechend gebogen, während das Ausgangsblech 412 das Abdeckblech 242 im Bereich der Umlenkstation U bildet.

In der Herstellungsstufe IV wird die Bogentraverse 276 mit den beiden Zwickelblechen 265 verschweißt. Die der Antriebs- bzw. Austragstation M zugeordneten Seitenwangen 220 mit dem Ausschnitt 297 werden an der Innenseite mit den Z-förmigen Profilblechen 281 und den Führungsblechen 299 sowie der Bogentraverse 294 und an der Außenseite mit der Tragleiste 305 zu einer kompletten Antriebsstation M verschweißt. Die U-förmigen Profilbleche 226 werden außerdem an den Innenseiten der Seitenwangen 220 für den unteren waagerechten Förderabschnitt A und den schräg aufwärts gerichteten Mittelabschnitt B des Höhenförderers angeschweißt.

Die Winkelstücke 246, die Führungsbleche 238, das Schurrenblech 245 und das Abdeckblech 242 werden in der Stufe IV zu der kompletten Umlenkstation U zusammengeschweißt.

In einer anschließenden Herstellungsstufe V werden die in Verbindung mit der Herstellungsstufe IV genannten Teile an den Nahtstellen 237, 264, 280 und 298 sowie an den Schnittkanten 261, 262, 263, 264 miteinander verschweißt und anschließend die Bodenbleche 232 entsprechend der geforderten Dichtheit befestigt.

In einer VI. Herstellungsstufe werden die Umlenktöpfe 240 und die Kurvenstücke 247, 270, 285 in den Förderrahmen eingebaut. Dann wird durch Montage des Antriebblocks M, Einziehen des Scharnierbandes und Befestigen des Kettenschutzes 309 an beiden Seiten der Höhenförderer fertiggestellt.

Die beschriebene Verfahrensweise läßt erkennen, daß für unterschiedliche Größen von Förderern genormte Teile vom Coil aus einfach durch Zuschneiden, Tiefziehen, Biegen und Schweißen außerordentlich wirtschaftlich hergestellt werden können, wobei diese Herstellungsweise eine schnelle Umstellung auf eine automatische Fertigung von Förderern ermöglicht.

Während vorstehend ein Höhenförderer und das Verfahren zu seiner Herstellung beschrieben wurden, ist es ersichtlich, daß die Herstellung eines Geradförderers ohne weiteres möglich ist, wenn man sich den Vorderabschnitt A und den Endabschnitt C des beschriebenen Förderers in Längsrichtung zueinander ausgerichtet und miteinander verbunden vorstellt, wobei lediglich die Seitenwangen 220 des Endabschnitts C in Fig. 8 entsprechend den Seitenwangen 220 des Vorderabschnitts A angepaßt werden müssen, damit eine ebene Oberseite des Förderrahmens für einen derartigen Geradförderer erzielbar ist. Außerdem würden in einem solchen Fall anstelle der Bogentraverse 294 und der gebogenen Führungsbleche 299 entsprechende Führungsvorrichtungen im Bereich der Antriebsstation M vorgesehen werden.

Schließlich ist es für den Fachmann verständlich, daß anstelle des nicht gezeigten Scharnierbandes der Förderer auch z. B. mit einer Kratzerkette oder mit anderen Transportbändern ausgerüstet werden kann. In diesem Fall ist es lediglich notwendig, in Höhe der Führungsbleche 238 bzw. der nach innen von den Seitenwangen 220 vorragenden unteren Schenkel 228 die sich gegenüberliegenden Seitenwangen 220 vorzugsweise ganzteilig verbindende, also auch sowohl in Querrichtung als auch in Längsrichtung des Förderers vollständig durchgehende Bleche vorzusehen, die im Falle des Höhenförderers an den Enden mit den Bogentraversen 276, 294 verschweißt sind, so daß eine durchgehende dichte Förderrinne für die Kratzerkette geschaffen wird.

**Patentansprüche:**

1. Scharnierbandförderer (10), vorzugsweise für Metallabfälle, wie Späne oder dgl., mit einem im Querschnitt U-förmigen Förderrahmen (11) dessen eines Ende mit einer Antriebsstation (M) und dessen anderes Ende mit einer Umlenkstation (U) für ein endloses flexibles, mit Löchern versehenes Scharnierband (13) ausgestattet ist, dessen Laufrollen (14, 15) in Führungskanälen (234, 235) geführt sind, die von Profilblechen (226) an der Innenseite von durch Traversen verbundenen Seitenwangen (17, 18; 220, 239) des Förderrahmens (11) sowie von jenen Seitenwangen (17, 18) selbst gebildet sind, wobei die oberen Enden der Seitenwangen (17, 18; 220) mit nach innen gerichteten Längskanten (28) versehen sind, dadurch gekennzeichnet, daß bogenförmige Führungen in den Umlenkbereichen für das Scharnierband (13) aus lösbar befestigten, gegossenen oder geformten, verschleißfesten Kurvenstücken (247, 270) bestehen, von denen ein Paar (247) an der Umlenkstation (U) an der Unterseite eines Schurrenbleches (39; 245) befestigt ist, das sich zwischen den Seitenwangen (17, 18; 220, 239) von der Oberseite der Umlenkstation (U) zum Scharnierband (13) hin abwärts erstreckt, und daß die unteren, das Leertrum des Scharnierbandes (13) führenden Schenkel (21, 22; 222) der Seitenwangen (17, 18; 220) durch ein im Querschnitt U-förmiges Bodenblech (20; 232) verbunden sind, das bis auf die Oberseite der Umlenkstation (U) um diese herumgeführt ist.

2. Scharnierbandförderer nach Anspruch 1, der als Höhenförderer ausgebildet ist, bei dem sich zwischen einem unteren und oberen waagerechten Förderabschnitt (A, C) ein schräg aufwärts gerichteter Förderabschnitt (C) erstreckt, dadurch gekennzeichnet, daß die bogenförmigen Führungen für das in den Umlenkbereichen der gegeneinander abgewinkelten Förderabschnitte (A, B, C) des Förderrahmens (11) jeweils außen liegende Trum des Scharnierbandes (13) aus Bogentraversen (33, 34; 276, 294) bestehen, die sich zwischen den Innenseiten der Seitenwangen (17, 18; 220) der benachbarten Förderabschnitte (A, B, C) durchgehend erstrekken und mit diesen fest verbunden sind.

3. Scharnierbandförderer nach Anspruch 2, dadurch gekennzeichnet, daß der untere und mittlere Förderabschnitt (A, B) des Förderrahmens (13) teilweise durch je ein eingeschweißtes Zwickelblech (265) verbunden sind, wobei die sich gegenüberliegenden Innenseiten der Zwickelbleche (265) und benachbarten Seitenwan-

gen (17, 18; 220) mit der Bogentraverse (276) verschweißt sind.

4. Scharnierbandförderer nach Anspruch 3, dadurch gekennzeichnet, daß jedes Zwickelblech (265) dem Profil der zugehörigen Seitenwangen (17, 18; 220) angepaßt ist, daß an der Unterseite einer dem oberen Schenkel (223) der Seitenwangen (220) entsprechenden Querschulter (267) der Zwickelbleche (265) je ein verschleißfestes Kurvenstück (270) lösbar befestigt ist, dessen Bogenfläche eine der Bogentraverse (276) parallele Krümmung aufweist.

5. Scharnierbandförderer nach Anspruch 2, dadurch gekennzeichnet, daß die Seitenwangen (17, 18; 220) des mittleren und oberen Förderabschnitts (B, C) des Förderers unmittelbar miteinander verschweißt sind, daß die Oberseite der Führungskanäle (234) für das Arbeitstrum des Scharnierbandes (13) von zwei die Nahtstelle (298) zwischen den Längenabschnitten (B, C) überbrückenden massiven Kurvenstücken (285) gebildet ist, die dem Profil der Profilbleche (226) an der Innenseite der Seitenwangen (220) angepaßt und mit diesen lösbar verbunden sind.

6. Scharnierbandförderer nach einem der Ansprüche 1 bis 5, dadurch gekennzeichnet, daß die bogenförmigen Führungen an der Antriebsstation (M) aus dem Leertrum des Scharnierbandes (13) zugeordneten Führungsblechen (35; 299) bestehen, die an ihrem in Förderrichtung (x) vorderen Ende an die waagerechten, nach innen abgewinkelten Schenkel (22; 222) der Seitenwangen (17, 18; 220) angeschlossen und mit ihrem in Förderrichtung (x) hinteren Ende aus der Bewegungsbahn des Leertrums des Scharnierbandes (13) herausgeführt sind.

7. Scharnierbandförderer nach einem der Ansprüche 1 bis 6, dadurch gekennzeichnet, daß an der Antriebsstation (M) das Bodenblech (20; 232) sich etwa horizontal unterhalb der gebogenen Führungsbleche (35; 299) an den Seitenwangen (17, 18; 220) für das Leertrum des Scharnierbandes (13) in einem Abstand und auf einer Länge derart erstreckt, daß das Innere des Förderrahmens (11) durch eine Eingriffsöffnung (47) zugänglich ist.

8. Scharnierbandförderer nach einem der Ansprüche 1 bis 7, dadurch gekennzeichnet, daß das Ende (230) der oberen Schenkel (229) der U-förmigen Profilbleche (226) rechtwinklig nach oben gegen die Unterseite des oberen, nach innen abgewinkelten Schenkels (223) der Seitenwangen (220) abgewinkelt und mit diesem in einem Abstand vom freien Ende der oberen Seitenwangenschenkel (223) verschweißt ist.

9. Scharnierbandförderer nach einem der Ansprüche 1 bis 8, dadurch gekennzeichnet, daß dem Arbeitstrum im Endabschnitt (C) des Förderers Z-förmige Profilbleche (281) zugeordnet sind, die dem Profil der U-förmigen Profilbleche (226) unter Weglassung ihres unteren, nach innen ragenden Schenkels (228) entsprechen.

10. Scharnierbandförderer nach einem der Ansprüche 1 bis 9, dadurch gekennzeichnet, daß die Umlenkung für das Scharnierband (13) in der Umlenkstation (U) aus zwei Umlenktöpfen (37; 240) besteht, die an den Seitenwangen (17, 18; 220) lösbar angebracht sind.

11. Scharnierbandförderer nach einem der Ansprüche 1 bis 10, dessen Antriebsstation (M) aus einem Antriebsmotor (50), einem Getriebe (51) und einer Antriebswelle (301) mit Umlenkorganen (53) für das Scharnierband (13) besteht, wobei die Antriebswelle (301) an den beiden Außenseiten der Seitenwangen (17, 18; 220) des Förderrahmens (11) in je einem Lagerbock (54; 304) gelagert ist, der mit einer parallel zur Längsrichtung (x) des Förderrahmens (11) verlaufenden Tragleiste (55; 305) verbunden ist, dadurch gekennzeichnet, daß die Lagerböcke (54; 304) jeweils mit einem an der Tragleiste (55; 305) angeordneten Gegenblech (59; 359) durch Schraubenbolzen (60; 306) verbunden sind, die je ein sich parallel zur Längsrichtung (x) des Förderers erstreckendes Langloch (58; 358) in der Tragleiste (55; 305) durchsetzen, und daß sich von dem Gegenblech (59; 359) quer zur Längsrichtung zwei Stützbleche (62, 63; 362, 363) im Abstand parallel zueinander erstrecken, zwischen denen ein Federelement (66; 366) mittels einer Spannvorrichtung (67; 367) axial verspannbar ist.

12. Scharnierbandförderer nach einem der Ansprüche 1 bis 11, dadurch gekennzeichnet, daß ein Kettenschutz (309) an der Antriebsstation (M) aus zwei Abschirmblechen (310) besteht, welche die Antriebswelle (52; 301) umgebende Ausschnitte (297) der Seitenwangen (17, 18; 220) überdecken und jeweils mit einem der an den Seitenwangen (17, 18; 220) befestigten Lagerböcke (54; 304) lösbar verbunden sind.

13. Scharnierbandförderer nach Anspruch 11 oder 12, dadurch gekennzeichnet, daß die Abschirmbleche (310) durch je eine seitliche Befestigungslasche (307) mit einer Schraube (306) des Lagerbocks (54; 304) an diesem befestigt sind, und daß der obere Rand mit einem Einschnitt (310A) versehen ist, der die Antriebswelle (54; 301) von unten und den Seiten im Abstand umgibt.

14. Scharnierbandförderer nach Anspruch 12 oder 13, dadurch gekennzeichnet, daß ein in bezug auf ein Kettenzahnrad (53; 303) der Antriebswelle (52; 301) konkav gekrümmtes Schutzblech (302) mit einem Teil seines Seitenrandes an der Innenseite des Abschirmbleches (310) angeschweißt ist, wobei das untere Ende des Schutzbleches in Höhe des unteren waagerechten Schenkels (222) der Seitenwangen (17, 18; 220) und das obere Ende in Höhe des oberen Schenkels (229) des Z-förmigen Profilblechs (281) an der Innenseite der Seitenwangen (17, 18; 220) ausläuft.

15. Verfahren zum Herstellen des Scharnierbandförderers nach Anspruch 1 oder einem der folgenden, dadurch gekennzeichnet, daß Ausgangsbleche zum Teil vom Coil für den Förderrahmen zugeschnitten und anschließend die Enden der zugeschnittenen Bleche abgekürzt und/oder konturiert werden, daß die so zugeschnittenen Bleche für die Seitenwangen, für die Führung des Scharnierbandes, für die Endstücke der Seitenwangen und für die Abkleidung der Umlenkstation sowie für deren Umlenktöpfe auf Profil gebogen bzw. tiefgezogen werden, daß die profilierten Führungsbleche in die Seitenwangen eingeschweißt werden, daß die der Umlenkstation zugeordneten Teile sowie die der Antriebsstation zugeordneten Teile zu je einer kompletten Einheit zusammengeschweißt werden, daß die kompletten Einheiten der Umlenkstation und der Antriebsstation mit den beiden Seitenwangen gleichzeitig zusammengestellt werden, daß die vorgefertigten massiven Kurvenstücke und Umlenktöpfe lösbar eingesetzt werden und daß danach der Antriebsblock in die Antriebsstation eingesetzt und nach der Montage des Transportbandes der Kettenschutz für die Bandkette beidseitig mit je einer Befestigungsschraube für die Lagerböcke an diesen befestigt werden.

16. Verfahren nach Anspruch 15, zum Herstellen eines Höhenförderers mit einem waagerechten Vorderabschnitt, einem diesem gegenüber schräg aufwärts gerichteten Mittelabschnitt und einem oberen waagerechten Endabschnitt, dadurch gekennzeichnet, daß an der Innenseite der Abwinkelung zwischen dem Vorderabschnitt und Mittelabschnitt zwischen einem Teil der benachbarten Enden der beiden Abschnitte ein Zwickelblech eingeschweißt wird, und daß die sich gegenüberliegenden Seitenwangen und Zwickelbleche im Bereich der Abwinklungen der Förderrahmen durch Bogentraversen miteinander verschweißt werden.

## Claims

1. A linked plate conveyor (10), preferably for metal waste such as swarf or the like, the conveyor having a channel-section frame (11) having driving station (M) at one end and at its other end a reversing station (U) for an endless flexible perforate linked web (13) running on rollers (14,15) guided in guide channels (234, 235) embodied by section plates (226) on the inside of side members (17, 18; 220, 239) of the frame (11), the same being interconnected by cross-members, and by the side members (17, 18) themselves, the top ends thereof having inwardly directed longitudinal edges (28), characterised in that arcuate guides in the web-reversal zones take the form of releasably secured cast or formed wear-resistant curved elements (247, 270), a pair (247) of which is secured to the underside of a chute plate (39; 245) at the reversing station (U), the chute plate extending downwardly between the side members (17, 18; 220, 239) from the top of the reversing station (U) to the web (13); and the bottom arms (21, 22; 222) of the side members (17, 18; 220) guide the bottom flight of the web (13) and are interconnected by a channel-section bottom plate (20; 232) which extends around the reversing station (U) as far as the top thereof.

2. A linked plate conveyor according to claim 1 in the form of a vertical conveyor in which a conveyor section (C) extends inclinedly upwards between a bottom horizontal conveyor section (A) and a top horizontal conveyor section (C), characterised in that the arcuate guides for that run of the web (13) which is on the outside in the deflection zones of the frame sections (A, B, C) which are at an angle to one another comprise arcuate cross-members (33, 34; 276, 294) which extend right through between the insides of the side members (17, 18; 220) of the adjacent conveyor sections (A, B, C) and are rigidly connected thereto.

3. A conveyor according to claim 2, characterised in that the bottom section (A) and the central section (B) of the frame (13) are partly interconnected by a welded-in gusset plate (265) in each section, the facing insides of the gusset plates (265) an adjacent side members (17, 18; 220) being welded to the arcuate cross-member (276).

4. A conveyor according to claim 3, characterised in that each gusset plate (265) is adapted to the cross-section of the associated side members (17, 18; 220); a wear-resistant curved member (270) is releasably secured to the underside of each one of cross-shoulders (267) corresponding to the top arm (223) of the side members (220); and the arcuate surface of the curved member (270) has a curvature parallel to the arcuate cross-member (276).

5. A conveyor according to claim 2, characterised in that the side members (17, 18; 220) of the central conveyor section (B) and top conveyor section (C) are directly welded together; the top of the guide channels (234) for the working flight of the web (13) is formed by two solid curved members (285) which bridge the junction (298) between the conveyor sections (B and C); and the latter curved members (285) are adapted to the cross-section of the section plates (226) on the inside of the side members (220) and are releasably connected thereto.

6. A conveyor according to any of claims 1 to 5, characterised in that the arcuate guides at the driving station (M) take the form of guide plates (35, 229) associated with the idle flight of the web (13), and the guideplates (35; 299) are connected, at the end which is at the front as considered in the conveying direction (x), to the horizontal inwardly bent arms (22; 222) of the side members (17, 18; 220) while their end which is at the rear as considered in the conveying direction (x) extends out of the movement path of the idle flight of the web (13).

7. A conveyor according to any of claims 1 to 6, characterised in that the bottom plate (20; 232) at the driving station (M) extends substantially horizontally below the bent guide plates (35; 299) on the side members (17, 18, 220) for the idle flight of the web (13) at a distance and over a length such that the interior of the frame (11) is

13

accessible through an access aperture (47).

8. A conveyor according to any of claims 1 to 7, characterised in that the end (230) of the top arms (229) of the channel-section members (226) is bent upwards at right-angles towards the underside of the top inwardly bent arm (223) of the side members (220) and is welded to such arm at a distance from the free end of the top side member arms (223).

9. A conveyor according to any of claims 1 to 8, characterised in that Z-shaped section plates (281) are associated with the operative flight in the terminal section (C) of the conveyor and correspond to the cross-section of the channel-section plates (226) without their bottom inwardly extending arm (228).

10. A conveyor according to any of claims 1 to 9, characterised in that the means for reversing the web (13) at the reversing station (U) take the form of two dished reversing members (37; 240) releasably disposed on the side members (17, 18; 220).

11. A conveyor according to any of claims 1 to 10 whose drive station (M) comprises a driving motor (50), a gearbox (51) and a drive shaft (301) with reversing elements (53) for the web (13), the drive shaft (301) being mounted in a bearing block (54; 304) disposed one each on the two outsides of the conveying frame side members (17, 18; 220), each bearing block being connected to a support member (55; 305) which extends parallel to the length (x) of the conveying frame (11), characterised in that the bearing blocks (54; 304) are connected by screwthreaded fasteners (60, 306) to a matching member (59; 359) disposed on the support strip or member (55; 305), each such fastener extending through elongated apertures (58; 358) in the support strip (55; 305), the latter aperture extending parallel to conveyor length (x); two support plates (62, 63; 362, 363) extend in spaced-appart parallel relationship from the matching member (59; 359) transversely of the said length; and a spring element (66; 366) can be stressed axially between the support plates by means of a stressing device (67; 367).

12. A conveyor according to any of claims 1 to 11, characterised in that a chain guard (309) at the driving station (M) comprises two shielding plates (310) which cover recesses (297) in the side members (17, 18; 220) around the drive shaft (52; 301) and are each releasably connected to one of the bearing blocks (54; 304) on the side members (17, 18; 220).

13. A conveyor according to claim 11 or 12, characterised in that the shielding plates (310) are each secured to the bearing block (54; 304) by a lateral securing member (307) with a screw (306) of such bearing block; and the top edge is formed with an incision (310A) which extends around the drive shaft (54; 301) from below and at a distance from the sides.

14. A conveyor according to claim 12 or 13, characterised in that a guard plate (302) which has a concave curvature in relation to a sprocket (53; 303) of the drive shaft (52; 301) is welded by way of a part of its side edge to the inside of the guard plate (310), the bottom end of the guard plate running out at the level of the bottom horizontal arm (222) of the side members (17, 18; 220) while the top end runs out at the level of the top arm (229) of the Z-shaped section plate (281) on the inside of the side members (17, 18; 220).

15. A method of producing the linked plate conveyor according to claim 1 or any of the following claims, characterised in that starting plates are cut to shape partly from the coil for the conveying frame, whereafter the ends of the cut-to-shape plates are shortened and/or contoured, the plates thus cut to shape are curved or deep drawn to shape for the side members, for guiding the web, for the side member end members and for the covering of the reversing station and for the dished reversing members thereof, the profiled guide plates are welded into the side members, the parts associated with the reversing station and the parts associated with the driving station are welded together to form a complete unit in each case, the complete units of the reversing station and of the driving station being assembled simultaneously with the two side members, the prefabricated solid curved members and dished reversing members are inserted releasably, whereafter the driving unit is introduced into the driving station and after assembly of the conveying web the chain guard for the web chain is secured on both sides, in each case by means of a securing screw, to the bearing blocks.

16. A method according to claim 15 for producing a vertical conveyor having a horizontal front section, a central section which inclines upwardly from the horizontal front section and a top vertical end section, characterised in that a gusset plate is welded in on the inside of the bend between the front section and the central section, between a part of the adjacent ends of the two sections, and the opposite side members and gusset plates are welded together near the bent parts of the conveying frame by arcuate cross-members.

## Revendications

1. Convoyeur (10) à bande articulée, de préférence pour des déchets métalliques tels que des copeaux ou analogues, avec un châssis de convoyage (11) de section en U, dont l'une des extrémités est équipée d'un poste d'entraînement (M) et dont l'autre extrémité est pourvue d'un poste de renvoi (U) pour une bande sans fin articulée (13), flexible et percée de trous, dont les galets de roulement (14, 15) sont guidés dans des canaux de guidage (234, 235) formés par des tôles profilées (226) à la face interne de flasques latéraux (17, 18; 220, 239) du châssis de convoyage (11) reliés par des traverses, ainsi que par ces flasques latéraux (17, 18) euxmêmes, les extrémités supérieures des flasques latéraux (17, 18; 220) étant dotées de bords longitudinaux (28) orientés vers l'intérieur, caractérisé par le fait que des guidages curvilignes dans les zones de déviation de la bande articulée (13) consistent en des cames (247, 270) résistant à l'usure, fixées de manière amovible, coulées ou façonnées, dont une paire (247) est fixée, au poste de renvoi (U), à la face inférieure d'une rampe en tôle (39; 245) qui s'étend vers le bas entre les flasques latéraux (17, 18; 220, 239) du côté supérieur du poste de renvoi (U) en direction de la bande articulée (13); et par le fait que les branches inférieures (21, 22; 222) des flasques latéraux (17, 18; 220), qui guident le brin à vide de la bande articulée (13), sont reliées par une tôle de fond (20; 232) de section en U et guidée tout autour du poste de renvoi (U) mis à part son côté supérieur.

2. Convoyeur à bande articulée selon la revendication 1, qui est réalisé sous la forme d'un convoyeur élévateur dans lequel une section de convoyage (C) orientée à l'oblique vers le haut s'étend entre des sections de convoyage horizontales inférieure et supérieure (A, C), caractérisé par le fait que les guidages curvilignes pour le brin de la bande articulée (13) situé à chaque fois à l'extérieur dans les zones de déviation des sections de convoyage (A, B, C) mutuellement coudées du châssis de convoyage (11) consistent en des traverses curvilignes (33, 34; 276, 294) qui s'étendent de manière ininterrompue entre les faces internes des flasques latéraux (17, 18; 220) des sections voisines de convoyage (A, B, C) et sont assujetties à ces dernières.

3. Convoyeur à bande articulée selon la revendication 2, caractérisé par le fait que les sections de convoyage inférieure et centrale (A, B) du châssis de convoyage (13) sont reliées partiellement par un gousset respectif en tôle (265) incorporé par soudage, les faces internes mutuellement opposées des goussets en tôle (265) et des flasques latéraux voisins (17, 18; 220) étant soudées à la traverse curviligne (276).

4. Convoyeur à bande articulée selon la revendication 3, caractérisé par le fait que chaque gousset en tôle (265) est adapté au profil des flasques latéraux associés (17, 18; 220); et par le fait que, à la face inférieure d'un épaulement transversal (267) des goussets en tôle (265) correspondant à la branche supérieure (223) des flasques latéraux (220), est fixée amoviblement une came (270) résistant à l'usure, dont la surface courbée présente une courbure parallèle à la traverse curviligne (276).

5. Convoyeur à bande articulée selon la revendication 2, caractérisé par le fait que les flasques latéraux (17, 18; 220) des sections de convoyage centrale et supérieure (B, C) du convoyeur sont directement soudés l'un à l'autre; et par le fait que la face supérieure des canaux de guidage (234) pour le brin de travail de la bande articulée (13) est formée par deux cames massives (285) enjambant la zone de jonction (298) entre les sections longitudinales (B, C), qui sont adaptées au profil des tôles profilées (226) à la face interne des flasques latéraux (220) et sont reliées amoviblement à ces derniers.

6. Convoyeur à bande articulée selon l'une des revendications 1 à 5, caractérisé par le fait que les guidages curvilignes au poste d'entraînement (M) consistent en des tôles de guidage (35; 299) qui, associées au brin à vide de la bande articulée (13), sont raccordées par leur extrémité située à l'avant dans la direction d'acheminement (x) aux branches horizontales (22; 222), coudées vers l'intérieur, des flasques latéraux (17, 18; 220) et sont guidées par leur extrémité postérieure dans la direction d'acheminement (x) à l'écart de la piste de mouvement du brin à vide de la bande articulée (13).

7. Convoyeur à bande articulée selon l'une des revendications 1 à 6, caractérisé par le fait que, au poste d'entraînement (M), la tôle de fond (20; 232) s'étend à peu près horizontalement au-dessous des tôles de guidage curvilignes (35; 299) sur les flasques latéraux (17, 18; 220) pour le brin à vide de la bande articulée (13), à une distance et sur une longueur telles que l'intérieur du châssis de convoyage (11) soit accessible par une ouverture d'intervention (47).

8. Convoyeur à bande articulée selon l'une des revendications 1 à 7, caractérisé par le fait que l'extrémité (230) des ailes supérieures (229) des tôles (226) profilées en U est coudée à angle droit vers le haut en direction de la face inférieure de la branche supérieure (223), coudée vers l'intérieur, des flasques latéraux (220) et est soudée à cette dernière à une distance de l'extrémité libre de la branche supérieure (223) des flasques latéraux.

9. Convoyeur à bande articulée selon l'une des revendications 1 à 8, caractérisé par le fait que, au brin de travail dans la section finale (C) du convoyeur, sont associées des tôles (281) profilées en Z qui correspondent au profil des tôles (226) profilées en U, en négligeant leur aile inférieure (228) en saillie vers l'intérieur.

10. Convoyeur à bande articulée selon l'une des revendications 1 à 9, caractérisé par le fait que la déviation pour la bande articulée (13) dans le poste de renvoi (U) consiste en deux cuvettes de renvoi (37; 240) qui sont montées amoviblement sur les flasques latéraux (17, 18; 220).

11. Convoyeur à bande articulée selon l'une des revendications 1 à 10, dont le poste d'entraînement (M) comprend un moteur d'entraînement (50), une transmission (51) et un arbre d'entraînement (301) avec des organes de renvoi (53) pour la bande articulée (13), l'arbre d'entraînement (301) étant monté, aux deux faces externes des flasques latéraux (17, 18; 220) du châssis de convoyage (11), dans un sabot respectif de palier (54; 304) qui est relié à une barrette de support (55; 305) s'étendant parallèlement au sens longitudinal (x) du châssis de convoyage (11), caractérisé par le fait que les sabots de paliers (54; 304) sont reliés à chaque fois, à une tôle opposée (59; 359) disposée sur la barrette de support (55; 305), par des boulons

filetés (60; 306) qui traversent respectivement un trou oblong (58; 358) s'étendant parallèlement au sens longitudinal (x) du convoyeur dans la barrette de support (55; 305) ; et par le fait que, à partir de la tôle opposée (59; 359) et perpendiculairement au sens longitudinal, s'étendent parallèlement à distance l'une de l'autre deux tôles d'appui (62, 63; 362, 363) entre lesquelles un élément élastique (66; 366) peut être bloqué axialement au moyen d'un dispositif de serrage (67; 367).

12. Convoyeur à bande articulée selon l'une des revendications 1 à 11, caractérisé par le fait que, au poste d'entraînement (M), une protection (309) de chaîne consiste en deux écrans en tôle (310) qui recouvrent des échancrures (297) des flasques latéraux (17, 18; 220) entourant l'arbre d'entraînement (52; 301) et qui sont reliés à chaque fois amoviblement à l'un des sabots de paliers (54; 304) fixés aux flasques latéraux (17, 18; 220).

13. Convoyeur à bande articulée selon la revendication 11 ou 12, caractérisé par le fait que les écrans en tôle (310) sont fixés au sabot de palier (54; 304) par l'intermédiaire d'une patte latérale respective de fixation (307) avec un boulon (306) dudit sabot de palier; et par le fait que le bord supérieur est muni d'une découpe (310A) qui entoure à distance l'arbre d'entraînement (54; 301) par-en bas et par les côtés.

14. Convoyeur à bande articulée selon la revendication 12 ou 13, caractérisé par le fait qu'une tôle protectrice (302), à courbure concave par rapport à une roue dentée (53; 303) à chaîne de l'arbre d'entraînement (52; 301) est soudée par une partie de son bord latéral à la face interne de l'écran en tôle (310), l'extrémité inférieure de la tôle protectrice s'achevant à la hauteur de la branche inférieure horizontale (222) des flasques latéraux (17, 18; 220) et l'extrémité supérieure s'achevant à la hauteur de l'aile supérieure (229) de la tôle (281) profilée en Z à la face interne des flasques latéraux (17, 18; 220).

15. Procédé pour la fabrication du convoyeur à bande articulée selon la revendication 1 ou l'une des suivantes, caractérisé par le fait que des tôles de départ sont partiellement sectionnées de la bobine pour le châssis de convoyage, après quoi les extrémités des tôles sectionnées sont raccourcies et/ou configurées; par le fait que les tôles ainsi sectionnées pour les flasques latéraux, pour le guidage de la bande articulée, pour les pièces extrêmes des flasques latéraux et pour le chemisage du poste de renvoi, ainsi que pour les cuvettes de renvoi de ce dernier, sont profilées par cintrage ou emboutissage; par le fait que les tôles de guidage profilées sont incorporées par soudage dans les flasques latéraux; par le fait que les parties associées au poste de renvoi ainsi que les parties associées au poste d'entraînement sont assemblées par soudage en une unité complète; par le fait que les unités complètes du poste de renvoi et du poste d'entraînement sont en même temps assemblées aux deux flasques latéraux; par le fait que les cames massives et cuvettes de renvoi préfabriquées sont incorporées amoviblement; et par le fait que, ensuite, le bloc d'entraînement est incorporé dans le poste d'entraînement et, après le montage de la bande transporteuse, la protection de chaîne pour la chaîne de bande sont fixées de part et d'autre aux sabots de paliers avec à chaque fois un boulon de fixation pour ces derniers.

16. Procédé selon la revendication 15, pour la fabrication d'un convoyeur élévateur avec une section antérieure horizontale, une section centrale orientée à l'oblique vers le haut par rapport à cette dernière et une section finale supérieure horizontale, caractérisé par le fait qu'un gousset en tôle est incorporé par soudage à la face interne du coude entre la section antérieure et la section centrale entre une partie des extrémités voisines des deux sections; et par le fait que les flasques latéraux et les goussets en tôle, se faisant face mutuellement, sont soudés les uns aux autres par des traverses curvilignes dans la région des coudes des châssis de convoyage.

FIG. 1

FIG. 2

FIG. 3

FIG. 4

FIG. 5

FIG. 6

FIG. 7

281, 282, 297, M, 302, 301, 309, 284, 283, 300, 222, 295, 224, 225, XII, C, 232, 233, 299, 296, 294, 298, 287, 285, 291, 286, 293, 228, 221, 222, 229, 292, 230, 227, 226, 280, 232, 233, 220, B, X, 225, 224

FIG. 8

FIG. 9

FIG. 10

FIG. 11

250,273

247,270

255,309

256,279

289

288

285

291

FIG. 12

290

FIG. 13

FIG. 14

FIG. 15

0 029 551

FIG. 16